(19) Europäisches Patentamt / European Patent Office / Office européen des brevets

(11) **EP 2 350 565 B1**

(12) **FASCICULE DE BREVET EUROPEEN**

(45) Date de publication et mention de la délivrance du brevet:
**18.06.2014 Bulletin 2014/25**

(51) Int Cl.:
***G01C 21/16*** (2006.01)     ***G01C 22/00*** (2006.01)

(21) Numéro de dépôt: **09736970.6**

(22) Date de dépôt: **20.10.2009**

(86) Numéro de dépôt international:
**PCT/EP2009/063741**

(87) Numéro de publication internationale:
**WO 2010/046364 (29.04.2010 Gazette 2010/17)**

(54) **DISPOSITIF ET PROCEDE DE DETERMINATION D'UNE CARACTERISTIQUE D'UNE TRAJECTOIRE FORMEE DE POSITIONS SUCCESSIVES D'UN ACCELEROMETRE TRIAXIAL LIE DE MANIERE SOLIDAIRE A UN ELEMENT MOBILE**

EINRICHTUNG UND VERFAHREN ZUM BESTIMMEN EINES CHARAKTERISTIKUMS EINES DURCH AUFEINANDERFOLGENDE POSITIONEN EINES STARR MIT EINEM MOBILEN ELEMENT VERBUNDENEN TRIAXIALBESCHLEUNIGUNGSMESSERS GEBILDETEN PFADS

DEVICE AND METHOD FOR DETERMINING A CHARACTERISTIC OF A PATH FORMED BY CONSECUTIVE POSITIONS OF A TRIAXIAL ACCELEROMETER RIGIDLY CONNECTED TO A MOBILE ELEMENT

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **22.10.2008 FR 0857181**

(43) Date de publication de la demande:
**03.08.2011 Bulletin 2011/31**

(73) Titulaires:
• **Movea**
  **38000 Grenoble (FR)**
• **Commissariat à l'Énergie Atomique et aux Énergies Alternatives**
  **75015 Paris (FR)**

(72) Inventeurs:
• **DENIS, Benoit**
  **F-38000 Grenoble (FR)**
• **GODIN, Christelle**
  **F-38190 Brignoud (FR)**

• **YOUSSEF, Joe**
  **F-38000 Grenoble (FR)**

(74) Mandataire: **Brunelli, Gérald**
  **Marks & Clerk France**
  **Immeuble Visium**
  **22, avenue Aristide Briand**
  **94117 Arcueil Cedex (FR)**

(56) Documents cités:
**JP-A- 2008 116 315**

• **ROSS STIRLING, JUSSI COLLIN, KEN FYFE, GERARD LACHAPELLE: "An innovative shoe-mounted pedestrian navigation system" GNSS 2003, 2003, XP002540353 cité dans la demande**
• **D. ALVAREZ, A.M. LOPEZ, J. RODRIGUEZ-URIA, J.C. ALVAREZ, R.C. GONZALEZ: "multisensor approach to walking distance estimation with foot inertial sensing" ENGINEERING IN MEDICINE AND BIOLOGY SOCIETY, EMBS 2007, 29TH ANNUAL CONFERENCE OF THE IEEE, août 2007 (2007-08), pages 5719-5722, XP002540354 Lyon, France cité dans la demande**

**EP 2 350 565 B1**

**Description**

L'invention porte sur un dispositif de détermination d'une caractéristique d'une trajectoire formée de positions successives d'un accéléromètre triaxial lié à un élément mobile.

De manière générale, l'invention est liée aux domaines de la capture de mouvement, et de la géolocalisation d'individus en déplacement. La capture de mouvement concerne des applications grand public telles des applications de loisir (consoles de jeu interactives, suivi du geste sportif, réalité virtuelle ou réalité augmentée), des applications d'aide à la navigation de piétons (les plus utilisés à l'heure actuelle étant les systèmes de navigation par satellites tel le GPS), des applications d'aide à la mobilité de personnes vulnérables ou temporairement fragilisées par leur environnement (personnes handicapées ou plongées dans l'obscurité), et des applications de fitness (podomètre, calcul de la dépense énergétique ou de la distance parcourue). La capture de mouvement concerne également des applications médicales (suivi des personnes âgées et/ou dépendantes, analyse de la marche pour la rééducation posturale ou aide au diagnostic), des applications de sécurité ou de secours (localisation de pompiers à l'intérieur d'un bâtiment en feu, suivi opérationnel de militaires, ou surveillance de prisonniers), mais aussi des applications à visée commerciale (statistiques sur les trajectoires suivies par les consommateurs dans les centres commerciaux ou les supermarchés, définition d'archétypes d'usage, ou proposition de services commerciaux topo-dépendants).

Il est notamment connu de reconstituer le déplacement d'un objet ou d'une personne munie d'un objet comprenant un émetteur de signaux reconnus par un système d'aide à la navigation par satellites, tel le système GPS, en extérieur, et par un système de radiolocalisation à base de transmissions Ultra Large Bande (ULB) ou WiFi en intérieur.

Dans de nombreuses zones géographiques, externes ou internes, la navigation à base de système d'aide à la navigation par satellites ou de radiolocalisation s'avère néanmoins très délicate, en raison de l'obstruction des signaux radio nécessaires à la mesure de métriques topo-dépendantes, par exemple en cas d'indisponibilité des signaux émis par un ou plusieurs satellites du système d'aide à la navigation, nécessaires à la mesure de pseudo-distances. En pratique, ces situations de blocage ou d'obstruction dégradent fortement la précision de l'information de localisation, et rendent même parfois le service d'aide à la navigation indisponible, comme illustré dans le document "An evaluation of UWB localization under non line-of-sight (NLOS) propagation" (A. Maali, A. Ouldali, H. Mimoun, et G. Baudoin), publié dans Wireless Pervasive Computing, ISWPC, 3rd International Symposium on, pages 379-382, en mai 2008. Généralement, les réalisations citées précédemment présentent un coût, une consommation, un encombrement, et/ou une infrastructure inadaptés, voire rédhibitoires pour des applications grand public.

D'autres systèmes, ont pour but d'élaborer un trajet à partir d'un point de départ donné, en utilisant des capteurs d'attitude (accéléromètre(s), magnétomètre(s), gyromètre) délivrant le plus souvent des mesures inertielles. Ces mesures permettent d'assurer la navigation par des moyens plus ou moins précis et compliqués, tels que décrits, par exemple dans les documents "Inertial head-tracker sensor fusion by a complementary separate-bias kalman filter" (E. Foxlin) publié en mars 1996 dans Virtual Reality Annual International Symposium, Proceedings of the IEEE 1996, pages 185-194; "Detection of spatio-temporal gait parameters by using wearable motion sensors" (K. Kogure L. Seon-Woo, et K. Mase), publié en 2005 dans Engineering in Medicine and Biology Society. IEEE-EMBS 2005. 27th Annual International Conference of the, pages 6836-6839, 2005; "Pedestrian tracking with shoe-mounted inertial sensors" (E. Foxlin), publié en novembre 2005 dans Computer Graphics and Applications, IEEE, 25 :38-46, Nov-Dec 2005; ou "Integration of foot-mounted inertial sensors into a Bayesian location estimation framework" (P. Robertson B. Krach), publié en mars 2008 dans Positioning, Navigation and Communication, 2008. WPNC 2008. 5th Workshop on, pages 55-61. De tels systèmes sont de coût et de complexité élevés, et manquent souvent de précision.

Des consoles de jeu vidéo, telle la Wii, utilisent des capteurs optiques et/ou à ultrasons pour déterminer la trajectoire d'un élément de commande de jeu. Ces systèmes sont couteux et limités.

Il existe également, comme présentés dans les documents "Assessment of walking features from foot inertial sensing" (S. Scapellato F. Cavallo A.M. Sabatini, et C. Martelloni), publié en mars 2005 dans Biomedical Engineering, IEEE Transactions on, pages 486- 494, ou "Multisensor approach to walking distance estimation with foot inertial sensing" (D. Alvarez A.M Lopez J. Rodriguez-Uria J.C. Alvarez, et R.C. Gonzalez), publié en août 2007 dans Engineering in Medicine and Biology Society, 2007, EMBS 2007. 29th Annual International Conference of the IEEE, pages 5719-5722, des systèmes dans lesquels on suppose deux accéléromètres et un gyromètre disposés dans le plan sagittal d'un utilisateur, qui permettent de déterminer l'attitude de ce capteur dans le plan. L'accélération est intégrée dans l'axe du pied. Ces systèmes ont un coût réduit, mais présentent d'autres inconvénients. D'une part, ils supposent que les capteurs sont parfaitement placés dans le plan sagittal, ce qui est quasiment impossible à réaliser concrètement par l'utilisateur, et provoque une erreur d'estimation liée au mauvais positionnement du ou des capteurs. D'autre part, ils supposent que la marche a lieu dans le plan sagittal, ce qui peut ne pas être le cas, lors d'une marche sur le côté, par exemple.

Le document, "An innovative shoe-mounted pedestrian navigation system" (K. Fyfe, Gérard Lachapelle, R. Stirling, et J. Collin), publié en avril 2003 dans Proc. European Navigation Conf. (GNSS), CD-ROM, Austrian Inst. of Navigation, divulgue un système muni de trois accéléromètres et d'un quatrième accéléromètre afin de calculer l'angle subit par le capteur. Cet accéléromètre supplémentaire est placé sur le même élément mobile, mais à distance de ce dernier. Les deux capteurs voient donc la même rotation et le même déplacement. Une telle structure permet d'estimer la vitesse de rotation de l'élément mobile, en rotation autour d'une direction sensiblement constante, en se passant d'un gyromètre. Ce système a un coût réduit du au remplacement d'un gyromètre mono-axe par un couple d'accéléromètres par rapport aux systèmes avec des gyromètres proposés par Alvarez et al et Scapellato et al. Cependant, un tel système présente les mêmes inconvénients que l'exemple cité ci-dessus, car seule la rotation autour de l'axe orthogonal au plan sagittal est prise en compte. En outre, l'estimation de la rotation par un couple d'accéléromètres, tout comme celle réalisée à l'aide d'un gyromètre, présente des dérives importantes. Un cap est également déterminé à l'aide d'un magnétomètre, par exemple lorsque le pied est posé, ce qui donne la direction du pied et non pas la direction du déplacement recherchée.

Le dispositif de JP2008116315 divulgue la détermination d'un axe de rotation sensiblement invariant (ou de façon équivalente, le plan orthogonal audit axe) de l'accéléromètre triaxial à partir des vecteurs délivrés par l'accéléromètre triaxial. Cette détermination a lieu entre deux instants d'immobilité, incluant deux instants consécutifs. Par contre, la projection (voir l'utilisation pour les calculs) des vecteurs délivrés par le capteur additionnel (e.g. magnétomètre) n'est pas effectué auxdits instant successifs. Le dispositif de JP2008116315 effectue d'abord une analyse statistique de vecteurs délivrés par l'accéléromètre pendant un certain nombre d'instants d'immobilité (égal à tous les instants pendant lesquelles le capteur GPS ne reçoit pas de signaux). Le résultat de cette analyse est la détermination du plan orthogonal invariant, à partir duquel la direction de la trajectoire est obtenue. Les vecteurs délivrés par le magnétomètre sont ensuite considérés pour corriger la direction de la trajectoire.

L'invention a pour but de déterminer une trajectoire à coût réduit, et de résoudre les problèmes précédemment cités.

Selon un aspect de l'invention, il est proposé un dispositif de détermination d'une caractéristique trajectoire formée de positions successives d'un accéléromètre triaxial lié de manière solidaire à un élément mobile, entre un premier instant d'immobilité et un deuxième instant d'immobilité de l'accéléromètre triaxial, consécutif audit premier instant d'immobilité, ledit dispositif comprenant, en outre, un capteur additionnel triaxial de mesure d'un vecteur d'un champ vectoriel sensiblement constant entre lesdits premier et deuxième instants d'immobilité, dans un repère global fixe lié au repère terrestre, ledit capteur additionnel étant lié de manière solidaire audit élément mobile et fixe dans le repère de l'accéléromètre, et des moyens de commande, caractérisé en ce que lesdits moyens de commande comprennent :

- des premiers moyens de détermination desdits premier et deuxième instants d'immobilité de l'accéléromètre triaxial ;
- des deuxièmes moyens de détermination d'un axe de rotation sensiblement invariant de l'accéléromètre triaxial entre lesdits premier et deuxième instants d'immobilité, et d'un plan orthogonal audit axe de rotation sensiblement invariant, dans un repère mobile lié à l'accéléromètre ou au capteur additionnel à partir des vecteurs délivrés par l'accéléromètre triaxial, ou à partir des vecteurs délivrés par le capteur additionnel ;
- des premiers moyens de calcul, auxdits instants successifs, de premières projections orthogonales sur ledit plan des vecteurs délivrés par l'accéléromètre triaxial et des vecteurs délivré par le capteur additionnel dans ledit repère mobile ;
- des troisièmes moyens de détermination, auxdits instants successifs, de la rotation de passage dudit repère mobile audit repère global fixe, à partir desdites premières projections orthogonales des vecteurs délivrés par le capteur additionnel ;
- des deuxièmes moyens de calcul, auxdits instants successifs, de deuxièmes projections orthogonales dans ledit repère global fixe, des premières projections orthogonales dans ledit plan des vecteurs délivrés par l'accéléromètre triaxial, fournies par lesdits premiers moyens de calcul ;
- des troisièmes moyens de calcul pour soustraire à chaque deuxième projection orthogonale dans ledit repère global fixe le vecteur moyen sur lesdits instants successifs, de manière à obtenir les accélérations centrées dans ledit plan, dépourvues de l'influence de la gravité terrestre et de dérives dudit dispositif, dans ledit repère global fixe ; et
- des quatrièmes moyens de calcul d'une caractéristique de la trajectoire à partir des accélérations centrées.

Un tel dispositif permet de déterminer une trajectoire d'un accéléromètre triaxial lié à un élément mobile, de manière précise et à coût réduit. L'élément mobile peut être une partie du corps humain comme un pied ou une main, ou une partie d'un corps animal, ainsi qu'une partie d'un corps artificiel tel un robot ou une souris informatique. Dans la suite de la description, l'invention sera décrite pour un pied d'un corps humain, mais peut s'appliquer par analogie à tout élément mobile.

Dans un mode de réalisation, lesdites positions successives sont sensiblement coplanaires.

Par exemple, le dispositif peut être un dispositif de détermination d'une trajectoire formée de positions successives sensiblement coplanaires d'un accéléromètre triaxial lié de manière solidaire à un élément mobile d'un corps humain, animal ou artificiel, entre un premier instant d'immobilité et un deuxième instant d'immobilité de l'accéléromètre triaxial, consécutif audit premier instant d'immobilité, l'accéléromètre triaxial étant en rotation par rapport à une direction sensiblement constante entre lesdits premier et deuxième instants d'immobilité. Ledit dispositif comprend, en outre, un capteur additionnel de mesure d'un vecteur de champ vectoriel sensiblement constant entre lesdits premier et deuxième instants d'immobilité, dans un repère global fixe lié au repère terrestre, ledit capteur additionnel étant lié de manière solidaire audit élément mobile et d'axes de mesures sensiblement parallèles aux axes de mesures de l'accéléromètre, et des moyens de commande. Lesdits moyens de commande comprennent :

- des premiers moyens de détermination desdits premier et deuxième instants d'immobilité de l'accéléromètre triaxial ;
- des deuxièmes moyens de détermination du plan de ladite trajectoire de l'accéléromètre triaxial, à partir des vecteurs délivrés par l'accéléromètre triaxial, ou à partir des vecteurs délivrés par le capteur additionnel, à différents instants successifs entre le premier et le deuxième instants d'immobilité, dans un repère mobile lié à l'accéléromètre triaxial et au capteur additionnel ;
- des premiers moyens de calcul, auxdits instants successifs, des projections orthogonales du vecteur délivré par l'accéléromètre triaxial et du vecteur délivré par le capteur additionnel dans ledit repère mobile, sur ledit plan de ladite trajectoire de l'accéléromètre triaxial ;
- des troisièmes moyens de détermination, auxdits instants successifs, de la rotation de passage dudit repère mobile audit repère global fixe, à partir desdites projections orthogonales des vecteurs délivrés par le capteur additionnel ;
- des deuxièmes moyens de calcul, auxdits instants successifs, de la projection orthogonale dans ledit repère global fixe, du vecteur délivré par l'accéléromètre triaxial fournie par lesdits premiers moyens de calcul ;
- des troisièmes moyens de calcul pour soustraire au vecteur délivré par lesdits deuxièmes moyens de calcul auxdits instants successifs, le vecteur moyen sur lesdits instants successifs, de manière à obtenir les accélérations centrées dans ledit plan de ladite trajectoire de l'accéléromètre triaxial, dépourvues de l'influence de la gravité terrestre et de dérives dudit dispositif, dans ledit repère global fixe ; et
- des quatrièmes moyens de calcul de la double intégration temporelle desdites accélérations centrées délivrées par lesdits troisièmes moyens de calcul, de manière à obtenir la trajectoire de l'accéléromètre triaxial dans ledit plan, exprimée dans ledit repère global fixe, entre lesdits premier et deuxième instants d'immobilité.

Un tel dispositif permet, à coût réduit, de déterminer une caractéristique d'une trajectoire plane d'un accéléromètre triaxial lié à un élément mobile, de manière précise.

Aussi, dans un mode de réalisation, ledit élément mobile est un pied, l'intervalle de temps séparant lesdits premier et deuxième instants d'immobilité de l'accéléromètre triaxial correspondant à un pas dudit pied.

Selon un mode de réalisation, lesdits moyens de commande comprennent des premiers moyens d'élaboration d'un vecteur de direction, adapté pour relier les positions respectives de l'accéléromètre triaxial audit premier instant d'immobilité et audit deuxième instant d'immobilité, exprimées dans ledit repère global fixe.

La direction de ce vecteur dans le repère global fixe donne la direction du déplacement, et sa longueur la distance parcourue.

Dans un mode de réalisation, ledit plan de la trajectoire étant vertical, lesdits moyens de commande comprennent, en outre, des deuxièmes moyens d'élaboration d'un cap de déplacement par rapport audit champ vectoriel mesuré par le capteur additionnel, lesdits deuxièmes moyens d'élaboration étant adaptés pour effectuer une projection orthogonale, dudit champ vectoriel mesuré par le capteur additionnel, sur un plan horizontal orthogonal audit plan de la trajectoire.

Si le capteur additionnel est un magnétomètre, on obtient la direction du déplacement par rapport au Nord. On peut, par exemple, tracer la direction du déplacement sur une carte ou donner les coordonnées de ce vecteur, indiquant ainsi dans quelle direction l'utilisateur s'est déplacé.

Dans un mode de réalisation, ledit plan de la trajectoire étant vertical, lesdits deuxièmes moyens de détermination du plan de ladite trajectoire de l'accéléromètre triaxial sont adaptés pour effectuer une décomposition en valeurs singulières de la matrice à trois colonnes formée par les vecteurs délivrés par l'accéléromètre triaxial auxdits instants successif, dans ledit repère mobile, et extraire les deux vecteurs correspondant aux deux plus grandes valeurs singulières.

Le dispositif est en translation dans un plan et effectue une rotation autour d'une direction sensiblement constante. C'est un moyen de calcul peu coûteux en nombre d'opérations et robuste. D'autre part on s'affranchit de l'orientation du capteur sur l'élément mobile. On ne fait pas d'hypothèse sur la direction de la trajectoire qui peut être quelconque.

Dans un mode de réalisation, ledit plan de la trajectoire étant vertical, lesdits deuxièmes moyens de détermination du plan de ladite trajectoire de l'accéléromètre triaxial sont adaptés pour effectuer une décomposition en valeurs propres et vecteurs propres, dans ledit repère mobile, la matrice d'autocorrélation de la matrice à trois colonnes formée par les vecteurs délivrés par l'accéléromètre triaxial auxdits instants successifs, et extraire les deux vecteurs propres correspondant aux deux plus grandes valeurs propres.

De même, le dispositif est en translation dans un plan et effectue une rotation autour d'une direction sensiblement constante. C'est un moyen de calcul peu coûteux en nombre d'opérations et robuste. D'autre part on s'affranchit de l'orientation du capteur sur l'élément mobile. On ne fait pas d'hypothèse sur la direction de la trajectoire qui peut être quelconque.

Selon un mode de réalisation, lesdits deuxièmes moyens de calcul comprennent des cinquièmes moyens de calcul de passage dans un repère intermédiaire, lié au repère terrestre, défini par un premier vecteur délivré par lesdits premiers moyens de calcul à partir d'un vecteur fourni par le capteur additionnel, et par un deuxième vecteur, orthogonal audit premier vecteur et appartenant audit plan de la trajectoire.

On minimise ainsi le nombre de calculs à effectuer puisque le premier vecteur est disponible et on utilise seulement quelques multiplications et additions pour passer au repère global.

Selon un mode de réalisation, dans lequel lesdits troisièmes moyens de détermination de la rotation de passage dudit repère mobile audit repère global fixe comprennent des moyens d'estimation d'un angle, ladite rotation de passage étant définie par une projection orthogonale sur ledit champ vectoriel sensiblement constant, suivie d'une rotation dudit angle estimé dans ledit plan de trajectoire de l'accéléromètre triaxial.

Cette estimation permet d'orienter la trajectoire dans un repère global connu, tel le repère NED ou "North-East-Down" en langue anglo-saxonne.

Par exemple lesdits moyens d'estimation sont adaptés pour estimer ledit angle à partir de la pente de la surface de contact de l'élément mobile, et du vecteur transmis par lesdits cinquièmes moyens de calcul à partir du vecteur transmis par l'accéléromètre triaxial.

La pente peut être connue par une table de correspondance prédéterminée fournissant la pente de la surface de contact de l'élément mobile à partir de la position de l'accéléromètre.

Cette méthode est robuste dès lors que la pente est précisément connue (dans les bâtiments par exemple la pente est souvent nulle, un autre exemple est une marche sur une pente inclinée de pente constante). Grâce à cette méthode, dans la caractéristique estimée de la trajectoire, le pied est au sol à chaque instant d'immobilité

Par exemple, lesdits moyens d'estimation sont adaptés pour estimer ledit angle à partir d'une décomposition en valeurs singulières de la matrice à trois colonnes fournie par lesdits cinquièmes moyens de calcul à partir de la matrice formée par les vecteurs délivrés par l'accéléromètre triaxial auxdits instants successifs.

En ce cas, aucune connaissance de la pente n'est nécessaire, on se base uniquement sur la statistique du signal.

Par exemple, lesdits moyens d'estimation sont adaptés pour estimer ledit angle comme l'angle, audit premier ou deuxième instant d'immobilité, entre le vecteur délivré par lesdits premiers moyens de calcul à partir du vecteur fourni par le capteur additionnel, et le vecteur délivré par lesdits premiers moyens de calcul à partir du vecteur fourni par l'accéléromètre triaxial.

Dans ce cas, on n'a pas besoin de cartographie, ni d'hypothèse sur la trajectoire de type trajectoire plus longue que haute.

Dans un mode de réalisation, lesdits moyens de commande comprennent des troisièmes moyens d'élaboration de la distance parcourue entre lesdits premier et deuxième instants d'immobilité, et/ou lors d'un ensemble d'intervalles de temps successifs séparant deux instants successifs d'immobilité de l'accéléromètre triaxial, à partir des données fournies par lesdits quatrièmes moyens de calcul.

On calcule facilement la distance parcourue entre les deux instants successifs d'immobilité de l'accéléromètre triaxial, et donc, dans le cas du pied, la distance parcourue par le pied entre deux appuis successifs.

Selon un mode de réalisation, lesdits moyens de commande comprennent des quatrièmes moyens d'élaboration d'une trajectoire durant un ensemble d'intervalles de temps successifs séparant deux instants successifs d'immobilité de l'accéléromètre triaxial, à partir des données fournies par lesdits quatrièmes moyens de calcul.

L'invention permet d'élaborer, avec un nombre de calculs réduits, une caractéristique de la trajectoire d'un utilisateur durant un déplacement.

Dans un mode de réalisation, ledit capteur additionnel est un magnétomètre triaxial de mesure du champ magnétique terrestre, sensiblement constant entre lesdits premier et deuxième instants d'immobilité.

Ainsi le coût est réduit, par exemple en comparaison de l'utilisation de gyromètres.

Selon un mode de réalisation, ledit accéléromètre triaxial est disposé de manière à se positionner sensiblement au niveau de la surface de contact de l'élément mobile, à un instant d'immobilité dudit accéléromètre triaxial.

En ce cas, l'accélération est bien nulle lors d'un appui du pied, ce qui améliore la précision du dispositif.

Dans un mode de réalisation, ledit capteur additionnel est disposé de manière à se positionner à distance de la surface de contact dudit élément mobile à un instant d'immobilité dudit accéléromètre triaxial.

On évite les perturbations de mesure du champ magnétique terrestre au niveau du sol, ce qui améliore la précision du dispositif.

Selon un mode de réalisation, lesdits moyens de commande sont liés à l'élément mobile ou disposés à distance de l'élément mobile, et adaptés pour fonctionner en temps réel ou en différé.

On peut réaliser un dispositif dans lequel lesdits moyens de commande se déplacent avec l'élément mobile ou non, et qui traite les informations en temps réel ou non.

Selon un autre aspect de l'invention, il est proposé un système de jeu vidéo comprenant un indicateur visuel ou auditif, tel un écran ou un haut-parleur, pour indiquer au moins un pas à effectuer par le joueur, comprenant au moins un dispositif tel que décrit précédemment.

Il est ainsi possible de contrôler la bonne exécution de la consigne et, par exemple, établir un score.

Selon un autre aspect de l'invention, il est proposé un système d'analyse de saut, comprenant au moins un dispositif tel que décrit précédemment.

On peut ainsi estimer la hauteur, la longueur, la durée, la qualité d'un saut.

Selon un autre aspect de l'invention, il est proposé un système de géolocalisation en extérieur ou en intérieur, comprenant au moins un dispositif tel que décrit précédemment.

Ce système est un système à bas coût qui peut être complété par une initialisation manuelle (l'utilisateur indique où il se trouve sur une carte) ou à l'aide d'un autre système de géolocalisation (GPS, ULB ...). Dans ce dernier cas, le système proposé viens améliorer les performances de l'autre système ou se substituer à lui lorsqu'il n'est plus disponible (exemple le GPS dans les bâtiments).

Selon un autre aspect de l'invention, il est proposé un système de calcul de dépense énergétique d'un utilisateur, comprenant au moins un dispositif tel que décrit précédemment.

Ce dispositif apporte une information importante sur le déplacement du pied. On peut ainsi intégrer ces informations sur la durée du pas afin d'obtenir une évaluation fine de la dépense énergétique qui tient compte de la hauteur du pied à chaque instant.

Par exemple, la caractéristique de la trajectoire de l'accéléromètre triaxial comprend la vitesse de l'accéléromètre triaxial, ou la trajectoire de l'accéléromètre triaxial.

Selon un autre aspect de l'invention, il est également proposé un procédé de détermination d'une caractéristique d'une trajectoire formée de positions successives d'un accéléromètre triaxial lié de manière solidaire à un élément mobile, entre un premier instant d'immobilité et un deuxième instant d'immobilité de l'accéléromètre triaxial, consécutif audit premier instant d'immobilité, au moyen en outre d'un capteur additionnel triaxial de mesure d'un vecteur d'un champ vectoriel sensiblement constant entre lesdits premier et deuxième instant d'immobilité dans un repère global fixe lié au repère terrestre, ledit capteur additionnel étant lié de manière solidaire audit élément mobile et et fixe dans le repère de l'accéléromètre, ledit procédé étant effectué par un dispositif comprenant l'accéléromètre triaxial et le capteur additionel triaxial, et comprenant les étapes suivantes :

- déterminer lesdits premier et deuxième instants d'immobilité de l'accéléromètre triaxial ;
- déterminer un axe de rotation sensiblement invariant de l'accéléromètre triaxial entre les premier et deuxième instants d'immobilité, et déterminer un plan orthogonal audit axe de rotation sensiblement invariant, dans un repère mobile lié à l'accéléromètre ou au capteur additionnel, à partir des vecteurs délivrés par l'accéléromètre triaxial ou à partir des vecteurs délivrés par capteur additionnel ;
- calculer, auxdits instant successifs, des premières projections orthogonales dans ledit plan, des vecteurs délivrés par l'accéléromètre triaxial et des vecteurs délivrés par le capteur additionnel dans ledit repère mobile ;
- déterminer, audits instants successifs, la rotation de passage dudit repère mobile audit repère global fixe, à partir desdites premières projections orthogonales des vecteurs délivrés par le capteur additionnel ;
- calculer, auxdits instants successifs, des deuxièmes projections orthogonales dans ledit repère global fixe des premières projections orthogonales dans ledit plan des vecteurs délivrés par l'accéléromètre triaxial ;
- soustraire à chaque deuxième projection orthogonale dans ledit repère global fixe, le vecteur moyen sur lesdits instants successifs de manière à obtenir les accélérations centrées dans ledit plan, dépourvues de l'influence de la gravité terrestre et des dérives dudit dispositif, dans ledit repère global fixe ; et
- déterminer une caractéristique de la trajectoire à partir des accélérations centrées.

L'invention sera mieux comprise à l'étude de quelques modes de réalisation décrits à titre d'exemples nullement limitatifs et illustrés par les dessins annexés sur lesquels :

- la figure 1 illustre schématiquement un mode de réalisation d'un dispositif, selon un aspect de l'invention ; et
- la figure 2 illustre schématiquement un mode de réalisation des moyens de commande d'un dispositif de la figure 1, selon un aspect de l'invention.

Dans l'ensemble de figures, les éléments ayants les mêmes références sont similaires.

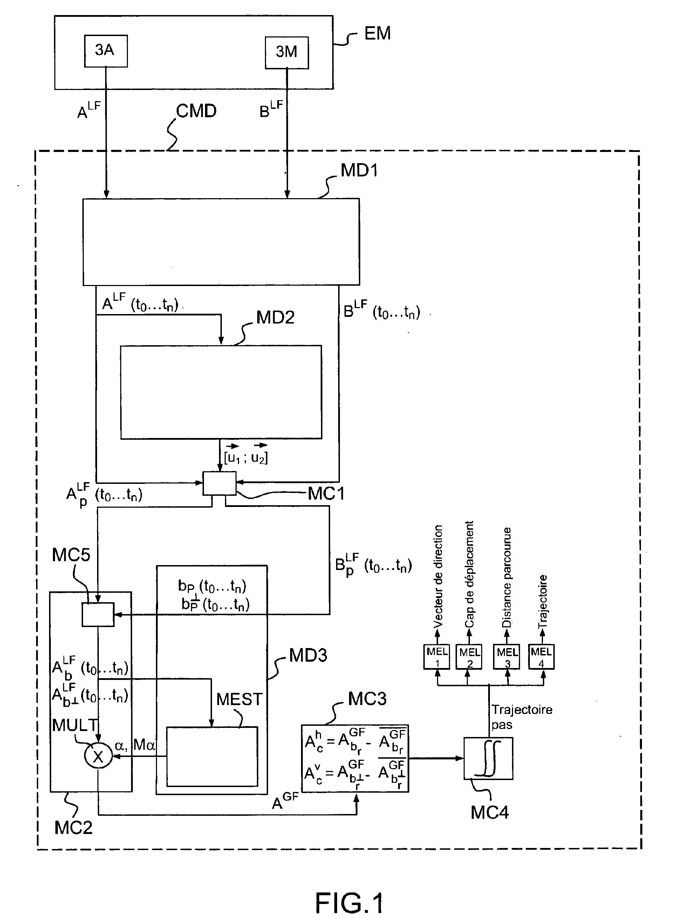

Tel qu'illustré sur la figure 1, un module de commande CMD reçoit les mesures transmises par un accéléromètre triaxial 3A et un capteur additionnel de mesure d'un vecteur de champ vectoriel sensiblement constant localement, en l'occurrence un magnétomètre triaxial 3M de mesure du champ magnétique terrestre. L'accéléromètre triaxial 3A est lié à un élément mobile EM, et le magnétomètre 3M est également lié au même élément mobile EM, directement ou indirectement, et ses axes de mesures sont sensiblement parallèles aux axes de mesures de l'accéléromètre. L'élément mobile EM peut être, par exemple, de manière non limitative, un pied d'un corps humain.

Bien entendu, en variante, si le magnétomètre est fixe dans le repère de l'accéléromètre, les repères des deux capteurs sont liés par une matrice de passage, et il suffit de réaliser une transformation supplémentaire pour exprimer des coordonnées d'un repère d'un des capteurs dans le repère de l'autre capteur, afin utiliser les coordonnées des mesures des capteurs dans un même repère.

Un premier module de détermination MD1 permettent, à partir des mesures transmises par l'accéléromètre triaxial 3A et le magnétomètre triaxial 3M, de déterminer un premier instant d'immobilité to et un deuxième instant d'immobilité $t_n$ de l'accéléromètre triaxial, consécutif audit premier instant d'immobilité $t_0$. Lorsque l'élément mobile EM est un pied, un instant d'immobilité correspond à un appui du pied sur la surface de contact. La technique utilisée par le premier module de détermination MD1 peut, par exemple être celle décrite dans le document "Robust step detection method for pedestrian navigation systems" (D.H. Hwang, J.H. Jang, et J.W. Kim) publié dans Electronics Letters, 43(14), en juillet 2007, dans lequel les auteurs cherchent à détecter une forme de base, correspondant à un signal typique pour un pas, dans le signal de la norme des accéléromètres. Lorsque cette forme est détectée, le début correspond à l'instant $t_0$ et la fin, à l'instant $t_n$.

Les instants successifs $t_0$, $t_1$, ...$t_n$ sont situés dans le temps, de manière chronologique entre le premier instant d'immobilité $t_0$ et le deuxième instant d'immobilité $t_n$. Les différents instants successifs $t_0$, $t_1$, ...$t_n$ correspondent à une numérisation et à un échantillonnage des signaux issus des capteurs suivie d'une calibration pour remonter aux grandeurs physiques mesurées.

Un deuxième module de détermination MD2 permet de déterminer le plan $[\vec{u}_1, \vec{u}_2]$ de ladite trajectoire de l'accéléromètre triaxial 3A, à partir des vecteurs délivrés par l'accéléromètre triaxial 3A, aux différents instants successifs $t_0$, $t_1$, ...,$t_n$, dans un repère mobile LF lié à l'accéléromètre triaxial 3A et au magnétomètre triaxial 3M.

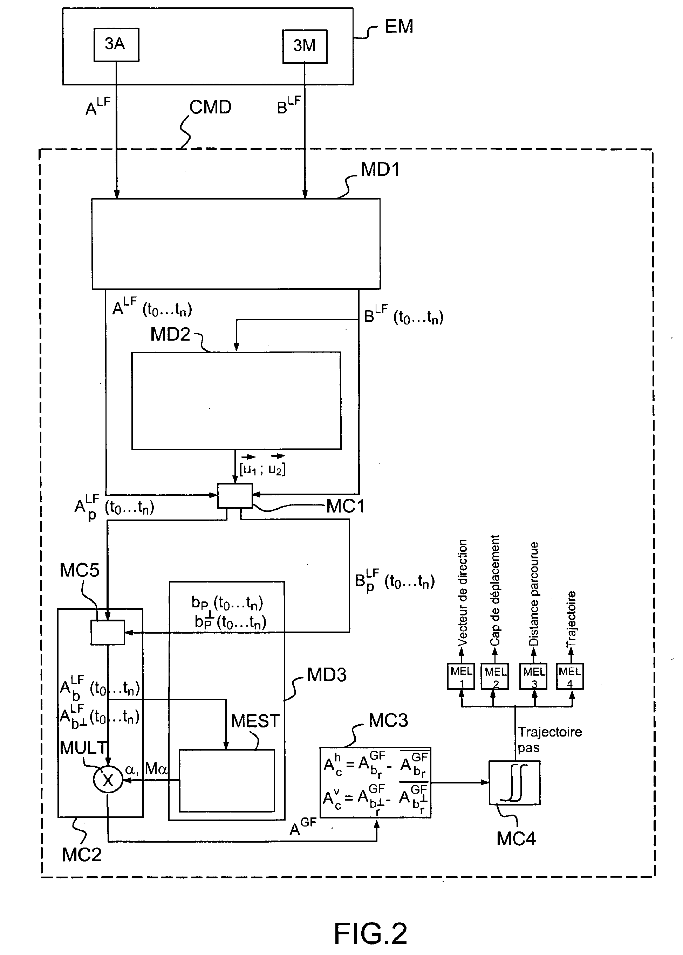

En variante, comme illustré sur la figure 2, le deuxième module de détermination MD2 peut déterminer le plan $[\bar{u}_1, \bar{u}_2]$ de ladite trajectoire à partir des vecteurs délivrés par magnétomètre triaxial 3M. La méthode utilisée par cette variante est analogue, en remplaçant les mesures de l'accéléromètre triaxial 3A par les mesures du magnétomètre triaxial 3M.

Le plan $[\vec{u}_1, \vec{u}_2]$ correspond au plan contenant au maximum les mesures, considérées comme des points ou vecteurs dans un espace à trois dimensions en considérant les mesure transmis pour chaque axe de l'accéléromètre triaxial 3A, ou respectivement du magnétomètre triaxial, et l'axe porté par le vecteur $\vec{u}_3$ est l'axe sur lequel la projection des mesures varie le moins. Le vecteur $\vec{u}_3$ est le vecteur normal au plan de la trajectoire $[\vec{u}_1, \vec{u}_2]$, mais aussi l'axe de rotation de l'accéléromètre triaxial 3A.

Pour déterminer ces trois vecteurs $\vec{u}_1, \vec{u}_2, \vec{u}_3$, les deuxièmes moyens de détermination forment une matrice $A^{LF}$ à n+1 lignes, n+1 étant le nombre d'échantillons pris entre $t_0$ et $t_n$ compris, et à 3 colonnes correspondant aux trois mesures des trois axes x, y, z de l'accéléromètre triaxial 3A. On a:

$$A^{LF}(t_0,...,t_n) = \begin{bmatrix} A_x^{LF}(t_0) & A_y^{LF}(t_0) & A_z^{LF}(t_0) \\ ... & ... & ... \\ A_x^{LF}(t_n) & A_y^{LF}(t_n) & A_z^{LF}(t_n) \end{bmatrix}$$

En, variante, on peut ne prendre qu'un sous-ensemble des échantillons aux instants successifs $t_0$, $t_1$, ...$t_n$.

Plusieurs modes de réalisation sont possibles pour déterminer les trois vecteurs $\vec{u}_1, \vec{u}_2, \vec{u}_3$, à partir de la matrice $A^{LF}$ (= $A^{LF}(t_0, ...,t_n)$).

Un mode de réalisation consiste à effectuer la décomposition en valeurs singulières SVD de la matrice $A^{LF}$ : $A^{LF}$ =USV. V est une matrice à trois lignes et trois colonnes dont chaque colonne correspond à un des trois vecteurs $\vec{u}_1, \vec{u}_2, \vec{u}_3$. La matrice S contient les trois valeurs singulières $s_1$, $s_2$, $s_3$. Ces trois valeurs singulières $s_1$, $s_2$, $s_3$, doivent êtres classées par ordre décroissant. Le vecteur $\vec{u}_3$ est la colonne de la matrice V correspondant à la plus petite valeur singulière. Les deux autres colonnes donnent les coordonnées des vecteurs formant le plan $[\vec{u}_1, \vec{u}_2]$.

Un autre mode de réalisation consiste à décomposer la matrice de corrélation R=$A^{LF\,T}\,A^{LF}$ en trois vecteurs propres et valeurs propres (R=u$^T$Su) et à les classer par valeurs propres décroissantes $s_1$,$s_2$,$s_3$ pour obtenir les trois vecteurs $\vec{u}_1, \vec{u}_2, \vec{u}_3$. $A^{LF\,T}$ correspond à la matrice transposée de $A^{LF}$. Les deux vecteurs propres correspondant aux deux plus grandes valeurs propres correspondent au plan $[\vec{u}_1, \vec{u}_2]$, le vecteur propre $\vec{u}_3$ est celui correspondant à la plus petite valeur propre.

Le module de commande CMD comprend également un premier module de calcul MC1 pour calculer, aux instants successifs $t_0$, $t_1$, ...$t_n$, des projections orthogonales du vecteur délivré par l'accéléromètre triaxial 3A et du vecteur délivré par le magnétomètre triaxial 3M dans ledit repère mobile LF, sur le plan de la trajectoire $[\vec{u}_1, \vec{u}_2]$ de l'accéléromètre triaxial 3A, on obtient les matrices des projections:

$$A_p^{LF}(t_0...t_n) = [A(t_0...t_n) \cdot u_1, A(t_0...t_n) \cdot u_2]$$

$$B_p^{LF}(t_0...t_n) = [B(t_0...t_n) \cdot u_1, B(t_0...t_n) \cdot u_2]$$

Le module de commande CMD comprend, en outre, un troisième module de détermination MD3, aux instants successifs $t_0$, $t_1$, ...$t_n$, de la rotation de passage du repère mobile LF à un repère global fixe GF, lié au repère terrestre, à partir des projections orthogonales des vecteurs délivrés par le magnétomètre triaxial 3M. Le troisième module de détermination MD3 détermine avantageusement un plan intermédiaire IF formé par les vecteurs $b_p(t)$, et $b_p^\perp(t)$, $b_p(t)$ étant le vecteur unitaire du champ magnétique terrestre $B^{LF}(t)$ et $b_p^\perp(t)$ étant obtenu par la rotation de 90° du vecteur $b_p(t)$ dans le plan de la trajectoire ou de la marche $[\vec{u}_1, \vec{u}_2]$. Ainsi, le troisième module de détermination élabore les vecteurs du repère intermédiaire IF:

$$b_p(t) = B_p^{LF}(t) \Big/ \left\| B_p^{LF}(t) \right\| \qquad \text{et} \qquad b_{p\perp}(t) = M_{90} b_p(t) = \begin{bmatrix} 0 & -1 \\ 1 & 0 \end{bmatrix} \cdot b_p(t)$$

Un deuxième module de calcul MC2, du module de commande CMD, effectue le calcul, aux instants successifs $t_0$, $t_1$, ..., $t_n$, de la projection orthogonale, dans le repère global fixe GF, du vecteur délivré par l'accéléromètre triaxial 3A fournie par le premier module de calcul MC1.
Le deuxième module de calcul MC2 comprend un cinquième module de calcul MC5 de calcul de passage dans le repère intermédiaire IF, lié au repère terrestre :
En d'autres termes, on projette orthogonalement $A_p^{LF}(t_0...t_n)$ dans le plan de la trajectoire $[\vec{u}_1, \vec{u}_2]$ sur les vecteurs $b_p(t)$, et $b_p^\perp(t)$ du repère intermédiaire IF pour obtenir les mesures de l'accéléromètre projetées sur le plan de la trajectoire $[\vec{u}_1, \vec{u}_2]$ et exprimées dans le repère intermédiaire IF :

$$A^{IF}(t) = \begin{bmatrix} A_p^{LF}(t) \cdot b(t) & A_p^{LF}(t) \cdot b_\perp(t) \end{bmatrix} = \begin{bmatrix} A_b^{IF} & A_{b\perp}^{IF} \end{bmatrix}$$

Le troisième module de détermination MD3 de la rotation de passage du repère mobile LF au repère global fixe GF comprend un module d'estimation MEST d'un angle $\alpha$, ladite rotation de passage étant définie par une projection orthogonale sur le champ magnétique terrestre sensiblement constant entre les deux instants d'immobilité $t_0$ et $t_n$, suivie d'une rotation de l'angle estimé $\alpha$ dans le plan $[\vec{u}_1, \vec{u}_2]$ de trajectoire de l'accéléromètre triaxial 3A.
En d'autres termes, le module d'estimation MEST permet de trouver la rotation $\alpha$ (caractérisé par une matrice de rotation $M_\alpha$) à effectuer pour passer du repère intermédiaire IF $\{ b_p(t), b_p^\perp(t) \}$ au repère global GF dans le plan de la marche porté par les vecteurs $\lfloor \vec{h}, \vec{v} \rfloor$, le troisième vecteur du repère global GF étant $\vec{u}_3$.
Dans le cas d'une navigation d'un piéton, $\vec{h}$. est l'horizontale dans le plan de la marche et $\vec{v}$ la verticale.
Pour déterminer $\alpha$, plusieurs modes de réalisation du module d'estimation MEST sont possibles.
Un premier mode de réalisation peut consister, connaissant la pente $\theta$ entre les deux points d'appui du pied aux instants to et $t_n$ par rapport à l'horizontale, à estimer $\alpha$ par l'équation suivante :

$$\tan \alpha = \frac{\int_{t=t_0}^{t_n} \int_{\tau=t_0}^{t} A_{b\perp}^{IF}(\tau) d\tau dt - \tan\theta \int_{t=t_0}^{t_n} \int_{\tau=t_0}^{t} A_b^{IF}(\tau) d\tau dt}{\int_{t=t_0}^{t_n} \int_{\tau=t_0}^{t} A_b^{IF}(\tau) d\tau dt + \tan\theta \int_{t=t_0}^{t_n} \int_{\tau=t_0}^{t} A_{b\perp}^{IF}(\tau) d\tau dt}$$

Cette pente θ peut être estimée grâce à l'inclinaison des capteurs sur le pied lorsqu'il est en appui, à $t_0$ ou $t_n$, en considérant que , la pente est constante pendant la durée du pas, ou à l'aide d'une cartographie mémorisée délivrant en sortie la pente de la surface de contact de l'endroit où la personne (l'élément mobile EM) est située.

Dans un autre mode réalisation, en admettant que la plus grande variance de l'accélération est appliquée suivant le déplacement du pied, la décomposition en valeurs singulières ou SVD de la matrice d'accélération $A^{IF}$ détermine la matrice $M_\alpha$, le vecteur singulier correspondant à la plus grande valeur singulière correspond au vecteur $\vec{h}$.

$$A^{IF} = \begin{bmatrix} A_b{}^{IF}(t_0) & A_{b\perp}{}^{LF}(t_0) \\ ... & ... \\ A_b{}^{LF}(t_n) & A_{b\perp}{}^{LF}(t_n) \end{bmatrix}$$

La décomposition en valeurs singulières s'écrit : $A^{IF}=USV$ où $V$ est la matrice $M_\alpha$

Cette hypothèse n'est valable que dans le cas de grands pas pour lequel le déplacement horizontal est plus grand que le déplacement vertical sur un sol plat, de pente nulle. Si la pente n'est pas nulle, on peut utiliser cette méthode mais $\vec{h}$ ne sera pas l'horizontale mais le vecteur reliant la position du capteur au premier instant d'immobilité $t_0$ à sa position au deuxième instant d'immobilité $t_n$.

Un autre mode de réalisation peut également être envisagé, en partant du fait qu'aux instants $t_0$ et $t_n$ le pied est posé, la verticale est suivant l'accélération mesurée à cet instant par l'accéléromètre triaxial 3A et $\alpha$ est l'angle entre $\vec{A}_p{}^{LF}(t_0)$ et $\vec{B}_p{}^{LF}(t_0)$, ou entre $\vec{A}_p{}^{LF}(t_n)$ et $\vec{B}_p{}^{LF}(t_n)$.

Le deuxième module de calcul MC2 comprend également un multiplicateur pour projeter les mesures $A_p$ dans le repère global :

$$\vec{A}^{GF}(t) = \begin{bmatrix} A_h{}^{GF}(t) & A_v{}^{GF}(t) \end{bmatrix} = \begin{bmatrix} A_b{}^{IF}(t) & A_{b\perp}{}^{IF}(t) \end{bmatrix} M_{\alpha(t)} = \begin{bmatrix} A^{LF}(t) \cdot b(t) & A^{LF}(t) \cdot b_\perp(t) \end{bmatrix} M_{\alpha(t)}$$

et

$$M_\alpha = \begin{bmatrix} \cos(\alpha) & \sin(\alpha) \\ -\sin(\alpha) & \cos(\alpha) \end{bmatrix}$$

Le module de commande CMD comprend, en outre, un troisième module de calcul MC3 pour soustraire au vecteur délivré par lesdits deuxièmes moyens de calcul MC2 auxdits instants successifs $t_0$, $t_1$, ...$t_n$, le vecteur moyen sur lesdits instants successifs, de manière à obtenir les accélérations centrées dans le plan $[\bar{u}_1, \bar{u}_2]$ de la trajectoire de l'accéléromètre triaxial 3A, dépourvues de l'influence de la gravité terrestre et de dérives du dispositif, dans le repère global fixe GF. Le troisième module de calcul réalise les calculs suivants de retraits des moyennes horizontales et verticales :

$$\vec{A}_c{}^{GF}(t) = \begin{bmatrix} A_h{}^{GF}(t) - \frac{1}{t_n - t_0} \int_{\tau=t_0}^{t_n} A_h{}^{GF}(\tau)d\tau & A_v{}^{GF}(t) - \frac{1}{t_n - t_0} \int_{\tau=t_0}^{t_n} A_v{}^{GF}(\tau)d\tau \end{bmatrix}$$

Le module de commande CMD comprend également un quatrième module de calcul MC4 d'une caractéristique de la trajectoire de l'accéléromètre triaxial des 3A à partir accélérations centrées, par exemple par double intégration temporelle des accélérations centrées délivrées par le troisième module de calcul MC3, de manière à obtenir, en l'espèce, la trajectoire de l'accéléromètre triaxial 3A c'est à dire du pied de l'utilisateur, dans le plan de la trajectoire du pied durant un pas, exprimée dans le repère global fixe GF, entre le premier appui et le deuxième appui, ou instants d'immobilité,

$t_0$ et $t_n$.

Le quatrième module de calcul MC4 permet d'intégrer deux fois, par rapport au temps, l'accélération pour calculer la trajectoire du pied, ou plus précisément de l'accéléromètre lié au pied, dans le plan de la trajectoire ou de la marche. L'intégration numérique peut être réalisée par mise en oeuvre des relations suivantes, utilisant l'intégration par la méthode des rectangles :

$$\begin{cases} \vec{v}(t) = \vec{v}(t-1) + \vec{A}_c^{GF} / Fe \\ \vec{x}(t) = \begin{bmatrix} x_h & x_v \end{bmatrix} = \vec{x}(t-1) + \vec{v}(t) / Fe + \vec{A}_c^{GF} / (2Fe^2) \end{cases}$$

dans laquelle $\vec{v}(t_0)$ = [0 0] et $\vec{x}(t_0)$ = [0 0]

Dans lesquelles Fe est la fréquence d'échantillonnage exprimée en Hz, et les composantes de la matrice $\vec{A}_c^{GF}$ sont exprimées en m/s². $\vec{v}$ et $\vec{x}$ sont respectivement les vecteurs vitesse et position selon les deux axes du repère global {h,v}.

En variante, le quatrième module de calcul MC4 peut mettre en oeuvre la double intégration par des modes de calculs numériques plus complexes, par exemples par utilisation de Splines.

En variante, le quatrième module de calcul MC4 peut effectuer une simple intégration pour remonter à la vitesse.

Le module de commande CMD peut comprendre un premier module d'élaboration MEL1 d'un vecteur de direction, adapté pour relier les positions respectives de l'accéléromètre triaxial 3A au premier instant d'immobilité to et au deuxième instant d'immobilité $t_n$, exprimées dans ledit repère global fixe GF.

Le module de commande CMD peut également comprendre un deuxième module d'élaboration MEL2 d'un cap de déplacement par rapport audit champ vectoriel mesuré par le capteur additionnel, en l'occurrence par rapport au champ magnétique terrestre mesuré par le magnétomètre triaxial 3M. Le deuxième module d'élaboration MEL2 peut élaborer le cap de la manière qui suit.

Le cap du déplacement est défini comme l'angle entre le pôle nord magnétique terrestre et la direction du déplacement. Il ne faut pas le confondre avec le cap de la personne, qui est son orientation par rapport au Nord. C'est souvent ce dernier qui est estimé dans la littérature. Le cap de la personne est souvent supposé être le même que celui du déplacement. Or, cela est le cas uniquement dans le cas d'une marche vers l'avant mais pas lorsque l'on marche en arrière, sur le côté, ou un peu en biais. Aussi, le deuxième module d'élaboration MEL2 estime le cap du déplacement et plus généralement la trajectoire dans le repère NED (North,East,Down) comme suit.

Dans ce qui précède, la trajectoire est estimée dans un plan $\overrightarrow{\lfloor h, v \rfloor}$ correspondant au plan de la trajectoire du pied. Le troisième vecteur $\vec{u}_3$, qui permet de former un repère à trois dimensions $\{h, v, \vec{u}_3\}$ correspondant respectivement à l'horizontale dans le plan de la marche, à la verticale dans le plan de la marche et à un vecteur normal au plan de la marche, qui est également supposé horizontal.

Pour calculer le cap, on effectue le calcul : $B^{GF} = B_h + B_v + Bu_3$ dans lequel:

$$B_h = \left\| B^{LF} \right\| [\cos \alpha \quad 0 \quad 0]$$

est la projection des mesures du magnétomètre triaxial 3M $B^{GF}$ sur h={1,0,0} ;

$$B_v = \left\| B^{LF} \right\| [0 \quad -\sin \alpha \quad 0]$$

est la projection des mesures du magnétomètre triaxial 3M $B^{GF}$ sur v={0,1,0} ; et

$$B_{u3} = B^{GF} . u_3^{GF} = B^{LF}(t) . u_3^{LF}$$

est la projection des mesures du magnétomètre triaxial 3M $B^{GF}$ sur $u_3^{GF} = \{0,0,1\}$ et $u_3^{LF}$ est le vecteur orthogonal au plan de la marche, exprimé dans le repère des capteurs et calculé précédemment.

La composante $B_{u3}$ doit être sensiblement invariante en fonction du temps, ce qui revient à faire l'hypothèse d'une marche dans un plan et plus généralement d'une rotation autour d'un axe sensiblement invariant et que le champ magnétique terrestre B n'est pas perturbé. Comme ce n'est généralement pas le cas en pratique, le deuxième module d'élaboration, peut prendre la moyenne temporelle sur le pas (entre les instants d'immobilité $t_0$ et $t_n$) comme estimation de cette composante.

Pour déterminer le cap seuls $B_h$ et $B_{u3}$ sont utiles. Il reste des indéterminations sur le signe des vecteurs $\vec{h}$ et $\vec{u}_3$, En effet, tels qu'ils ont été définis ci-avant, $\vec{h}$ peut être dans le sens inverse du sens du déplacement et $\vec{v}$ peut être dirigé vers le haut ou vers le bas.

Le deuxième module d'élaboration MEL2 construit un repère $\{\vec{p}_1, \vec{p}_2, \vec{p}_3\}$ tel que :

$\vec{p}_1$ est un vecteur horizontal dans le plan de la marche (parallèle à $\vec{h}$) et dans le sens du déplacement des capteurs ;

$\vec{p}_2$ est un vecteur vertical (parallèle à $\vec{v}$) dirigé vers le bas

$\vec{p}_3$ est un vecteur perpendiculaire au plan de la marche (parallèle à $\vec{u}_3$) formant un repère direct $\{\vec{p}_1, \vec{p}_2, \vec{p}_3\}$

Les vecteurs $\vec{p}_1, \vec{p}_2, \vec{p}_3$ sont déterminés comme suit.

$\vec{p}_1$ est un vecteur horizontal qui correspond au sens du déplacement de l'utilisateur du dispositif. Il est obtenu grâce au déplacement horizontal $X_h(t)$ qui correspond à la première composante du vecteur de déplacement $\vec{x}(t)$ donné par le quatrième module de calcul MC4. Si $X_h(t)$ est positif, alors $\vec{p}_1 = h = '$ {1 0 0}, sinon $\vec{p}_1 = -h = $ {-1 0 0}, le déplacement devant être positif dans le sens du déplacement.

$\vec{p}_2$ est vertical et orienté vers le bas. Si la projection de B(t) sur $\vec{v}$ est positive alors $\vec{p}_2 = v = $ {0 1 0}, sinon $\vec{p}_2 = -v = $ {0 -1 0}, le champ magnétique terrestre B mesuré devant toujours être orienté vers le bas.

$\vec{p}_3$ est le troisième vecteur formant un repère direct $\{\vec{p}_1, \vec{p}_2, \vec{p}_3\}$ avec les deux autres.

L'angle φ entre la direction du déplacement $\vec{p}_1$ et le nord magnétique dans le repère {Nord, Est} peut être obtenu en inversant les formules suivantes :

$$\cos \hat{\varphi} = \frac{B^{GF} . \vec{p}_1}{\sqrt{\left(B^{GF} . \vec{p}_1\right)^2 + \left(B^{GF} . \vec{p}_3\right)^2}}$$

$$\sin \hat{\varphi} = \frac{B^{GF} . \vec{p}_3}{\sqrt{\left(B^{GF} . \vec{p}_1\right)^2 + \left(B^{GF} . \vec{p}_3\right)^2}}$$

Le module de commande CMD peut aussi comprendre un troisième module d'élaboration MEL3 de la distance parcourue entre les premier et deuxième instants d'immobilité $t_0$ et $t_n$, i.e. un pas, et/ou lors d'un ensemble d'intervalles de temps successifs séparant deux instants successifs d'immobilité $t_0$ et $t_n$ de l'accéléromètre triaxial, i.e. une succession de pas, à partir des données fournies par le quatrième module de calcul.

Par exemple la distance horizontale parcourue durant un pas est donnée par :

$$d_h(t_0, t_n) = x_h(t_n) - x_h(t_0)$$

Pour une série de pas, la distance parcourue est donnée par la somme des distances calculées pour chaque pas.

Le module de commande CMD peut également comprendre un quatrième module d'élaboration MEL4 d'une trajectoire durant un ensemble d'intervalles de temps successifs séparant deux instants successifs d'immobilité $t_0$ et $t_n$ de l'accéléromètre triaxial 3A, en l'espèce durant un ensemble de pas successifs, à partir des données fournies par le quatrième module de calcul. Par exemple, au moyen des mêmes formules que celles utilisées par le deuxième module d'élaboration MEL2, ou directement à partir des résultats du deuxième module d'élaboration MEL2 si le dispositif les comprend. Le déplacement dans le plan horizontal correspondant est donné par $X_h(t)$.

Le déplacement selon l'axe dirigé vers le Nord est donné par la relation suivante :

$$x_N(t) = x_h(t) \frac{B^{GF} . \vec{p}_1}{\sqrt{\left(B^{GF} . \vec{p}_1\right)^2 + \left(B^{GF} . \vec{p}_3\right)^2}}$$

Le déplacement selon l'axe dirigé vers l'Est est donné par la relation suivante :

$$x_E(t) = x_h(t) \frac{B^{GF} . \vec{p}_3}{\sqrt{\left(B^{GF} . \vec{p}_1\right)^2 + \left(B^{GF} . \vec{p}_3\right)^2}}$$

Le déplacement selon le bas est donné par la relation suivante :

$x_D(t) = \pm x_V$ (1), le signe étant donné le signe de $\vec{p}_2$ qui est orienté vers le bas.

On obtient ainsi la trajectoire estimée dans le plan horizontal ($x_N(t)$, $x_E(t)$) pour une série de pas.

On peut également estimer le déplacement dans tout repère global GF pour lequel on connait la matrice de rotation permettant de passer du repère NED au repère voulu. Par exemple, lorsqu'une personne est devant sa console de jeu. On peut faire une acquisition des mesures lorsque la personne est immobile et face à son écran. Le cap de la personne qui est calculé sert de référence pour l'orientation de son personnage virtuel.

En variante, la prise en compte des deux instants d'immobilité successifs, peuvent être remplacés par la prise en compte de deux instants successifs pour lesquels les vecteurs vitesses dans le plan de la trajectoire sont connus, ainsi que de l'angle $\alpha$ à ces deux instants, ces données pouvant être mesurées par des capteurs additionnels ou estimées à partir de mesures fournies par des capteurs additionnels. Dans un tel cas, le quatrième module de calcul doit initialiser la vitesse avec la vitesse du premier instant et ajouter une constante dépendant des vitesses des deux instants à l'accélération centrée.

Dans le cas plus général d'une rotation autour d'un axe sensiblement invariant, le deuxième module de détermination MD2 estime l'axe de rotation en utilisant le capteur additionnel triaxial, le premier module de calcul MC1 effectue également une projection selon le vecteur $u_3$. En outre, le troisième module de calcul MC3 calcule l'accélération centrée selon le vecteur $u_3$, et le quatrième module de calcul MC4 intègre cette dernière accélération centrée, une fois pour obtenir la vitesse, ou deux fois pour la position.

La présente invention permet, à coût réduit de déterminer une trajectoire planaire d'un accéléromètre triaxial lié à un élément mobile, notamment un pied, de manière précise et à coût réduit. L'élément mobile peut être une autre partie du corps humain, comme une main, une partie d'un corps animal, ou une partie d'un corps artificiel tel un robot ou une souris informatique.

**Revendications**

**1.** Dispositif de détermination d'une caractéristique d'une trajectoire formée de positions successives d'un accéléromètre triaxial (3A) lié de manière solidaire à un élément mobile (EM), entre un premier instant d'immobilité ($t_0$) et un deuxième instant d'immobilité ($t_n$) de l'accéléromètre triaxial (3A), consécutif audit premier instant d'immobilité ($t_0$), ledit dispositif comprenant, en outre, un capteur additionnel triaxial de mesure d'un vecteur d'un champ vectoriel sensiblement constant entre lesdits premier et deuxième instants d'immobilité ($t_0, t_n$), dans un repère global fixe (GF) lié au repère terrestre, ledit capteur additionnel étant lié de manière solidaire audit élément mobile (EM) et fixe dans le repère de l'accéléromètre (3A), et des moyens de commande (CMD), lesdits moyens de commande (CMD) comprenant :

- des premiers moyens de détermination (MD1) desdits premier et deuxième instants d'immobilité ($t_0, t_n$) de l'accéléromètre triaxial (3A) ;
- des deuxièmes moyens de détermination (MD2) d'un axe de rotation sensiblement invariant de l'accéléromètre triaxial (3A) entre lesdits premier et deuxième instants d'immobilité ($t_0, t_n$), et d'un plan orthogonal audit axe de rotation sensiblement invariant, dans un repère mobile (LF) lié à l'accéléromètre (3A) ou au capteur additionnel à partir des vecteurs délivrés par l'accéléromètre triaxial (3A), ou à partir des vecteurs délivrés par le capteur additionnel ;
**caractérisé en ce que** lesdits moyens de commande (CMD) comprennent :

- des premiers moyens de calcul (MC1), auxdits instants successifs ($t_0$,t,,...,$t_n$), de premières projections orthogonales sur ledit plan des vecteurs délivrés par l'accéléromètre triaxial (3A) et des vecteurs délivrés par le capteur additionnel dans ledit repère mobile (LF) ;

- des troisièmes moyens de détermination (MD3), auxdits instants successifs ($t_0$,$t_1$,...,$t_n$), de la rotation de passage dudit repère mobile (LF) audit repère global fixe (GF), à partir desdites premières projections orthogonales des vecteurs délivrés par le capteur additionnel ;

- des deuxièmes moyens de calcul (MC2), auxdits instants successifs ($t_0$,$t_1$,...,$t_n$), de deuxièmes projections orthogonales dans ledit repère global fixe (GF), des premières projections orthogonales dans ledit plan des vecteurs délivrés par l'accéléromètre triaxial (3A), fournies par lesdits premiers moyens de calcul (MC1) ;

- des troisièmes moyens de calcul (MC3) pour soustraire à chaque deuxième projection orthogonale dans ledit repère global fixe (GF) le vecteur moyen sur lesdits instants successifs ($t_0$,$t_1$,...,$t_n$), de manière à obtenir les accélérations centrées dans ledit plan, dépourvues de l'influence de la gravité terrestre et de dérives dudit dispositif, dans ledit repère global fixe (GF) ; et

- des quatrièmes moyens de calcul (MC4) d'une caractéristique de la trajectoire à partir des accélérations centrées.

2. Dispositif selon la revendication 1, dans lequel lesdites positions successives sont sensiblement coplanaires.

3. Dispositif selon la revendication 1 ou 2, dans lequel ledit élément mobile (EM) est un pied, l'intervalle de temps séparant lesdits premier et deuxième instants d'immobilité ($t_0$,$t_n$) de l'accéléromètre triaxial (3A) correspondant à un pas dudit pied.

4. Dispositif selon l'une des revendication 1 à 3, dans lequel lesdits moyens de commande (CMD) comprennent des premiers moyens d'élaboration (MEL1) d'un vecteur de direction, adapté pour relier les positions respectives de l'accéléromètre triaxial (3A) audit premier instant d'immobilité ($t_0$) et audit deuxième instant d'immobilité ($t_n$), exprimées dans ledit repère global fixe (GF).

5. Dispositif selon la revendication 4, dans lequel ledit plan de la trajectoire étant vertical, lesdits moyens de commande (CMD) comprennent, en outre, des deuxièmes moyens d'élaboration (MEL2) d'un cap de déplacement par rapport audit champ vectoriel mesuré par le capteur additionnel, lesdits deuxièmes moyens d'élaboration (MEL2) étant adaptés pour effectuer une projection orthogonale, dudit vecteur de champ vectoriel mesuré par le capteur additionnel, sur un plan horizontal orthogonal audit plan de la trajectoire.

6. Dispositif selon l'une des revendications 1 à 5, dans lequel ledit plan de la trajectoire étant vertical, lesdits deuxièmes moyens de détermination (MD2) du plan de ladite trajectoire de l'accéléromètre triaxial (3A) sont adaptés pour :

- effectuer une décomposition en valeurs singulières de la matrice à trois colonnes $\left( A_P^{LF}(t_0...t_n) \right)$ formée par les vecteurs délivrés par l'accéléromètre triaxial (3A) auxdits instants successifs ($t_0$,$t_1$,...,$t_n$), dans ledit repère mobile, et extraire les deux vecteurs correspondant aux deux plus grandes valeurs singulières; ou

- effectuer une décomposition en valeurs propres et vecteurs propres, dans ledit repère mobile (LF), la matrice d'autocorrélation de la matrice à trois colonnes formée par les vecteurs délivrés par l'accéléromètre triaxial (3A) auxdits instants successifs ($t_0$,$t_1$,...,$t_n$), et extraire les deux vecteurs propres correspondant aux deux plus grandes valeurs propres.

7. Dispositif selon l'une des revendications 1 à 6, dans lequel lesdits deuxièmes moyens de calcul (MC2) comprennent des cinquièmes moyens de calcul (MC5) de passage dans un repère intermédiaire (IF), lié au repère terrestre, défini par un premier vecteur délivré par lesdits premiers moyens de calcul (MC1) à partir d'un vecteur fourni par le capteur additionnel, et par un deuxième vecteur, orthogonal audit premier vecteur et appartenant audit plan de la trajectoire.

8. Dispositif selon l'une des revendications 1 à 7, dans lequel, lesdits troisièmes moyens de détermination (MD3) de la rotation de passage dudit repère mobile (LF) audit repère global fixe (GF) comprennent des moyens d'estimation (MEST) d'un angle ($\alpha$), ladite rotation de passage étant définie par une projection orthogonale sur ledit champ vectoriel sensiblement constant, suivie d'une rotation dudit angle estimé ($\alpha$) dans ledit plan de trajectoire de l'accéléromètre triaxial (3A).

9. Dispositif selon la revendication 8, dans lequel lesdits moyens d'estimation (MEST) sont adaptés pour estimer ledit angle ($\alpha$) :

- à partir de la pente ($\theta$) de la surface de contact de l'élément mobile (EM), et du vecteur transmis par lesdits cinquièmes moyens de calcul (MC5) à partir du vecteur transmis par l'accéléromètre triaxial (3A) ; ou
- à partir d'une décomposition en valeurs singulières de la matrice à trois colonnes fournie par lesdits cinquièmes moyens de calcul (MC5) à partir de la matrice ($A^{IF}$) formée par les vecteurs délivrés par l'accéléromètre triaxial (3A) auxdits instants successifs ($t_0, t_1, ..., t_n$) ; ou
- comme l'angle, audit premier ou deuxième instant d'immobilité ($t_0, t_n$), entre le vecteur délivré par lesdits premiers moyens de calcul (MC1) à partir du vecteur fourni par le capteur additionnel, et le vecteur délivré par lesdits premiers moyens de calcul (MC1) à partir du vecteur fourni par l'accéléromètre triaxial (3A).

10. Dispositif selon l'une des revendications précédentes, dans lequel lesdits moyens de commande (CMD) comprennent des troisièmes moyens d'élaboration (MEL3) de la distance parcourue par ledit accéléromètre triaxial (3A) entre lesdits premier et deuxième instants d'immobilité ($t_0, t_n$), et/ou lors d'un ensemble d'intervalles de temps successifs séparant deux instants successifs d'immobilité ($t_0, t_n$) de l'accéléromètre triaxial (3A), à partir des données fournies par lesdits quatrièmes moyens de calcul (MC4).

11. Dispositif selon l'une des revendications précédentes, dans lequel lesdits moyens de commande (CMD) comprennent des quatrièmes moyens d'élaboration (MEL4) d'une trajectoire durant un ensemble d'intervalles de temps successifs séparant deux instants successifs d'immobilité ($t_0, t_n$) de l'accéléromètre triaxial (3A), à partir de ladite caractéristique de la trajectoire fournie par lesdits quatrièmes moyens de calcul (MC4).

12. Dispositif selon l'une des revendications précédentes, dans lequel ledit capteur additionnel est un magnétomètre triaxial (3M) de mesure du champ magnétique terrestre, sensiblement constant entre lesdits premier et deuxième instants d'immobilité ($t_0, t_n$).

13. Dispositif selon l'une des revendications précédentes, dans lequel ledit accéléromètre triaxial (3A), est disposé de manière à se positionner sensiblement au niveau de la surface de contact de l'élément mobile (EM) à un instant d'immobilité dudit accéléromètre triaxial (3A).

14. Dispositif selon l'une des revendications précédentes, dans lequel ledit capteur additionnel est disposé de manière à se positionner à distance de la surface de contact dudit élément mobile (EM), à un instant d'immobilité dudit accéléromètre triaxial (3A).

15. Dispositif selon l'une des revendications précédentes, dans lequel lesdits moyens de commande (CMD) sont liés à l'élément mobile (EM) ou disposés à distance de l'élément mobile (EM), et adaptés pour fonctionner en temps réel ou en différé.

16. Système comprenant au moins un dispositif selon l'une des revendications 3 à 15, le système pouvant être:

- un système de jeu vidéo comprenant un indicateur visuel ou auditif pour indiquer au moins un pas à effectuer par le joueur, ou
- un système d'analyse de saut, ou
- un système de géolocalisation en extérieur ou en intérieur, ou
- un système de calcul de dépense énergétique d'un utilisateur.

17. Système selon l'une des revendications précédentes, dans lequel ladite caractéristique de la trajectoire de l'accéléromètre triaxial (3A) comprend la vitesse de l'accéléromètre triaxial (3A), et/ou la trajectoire de l'accéléromètre triaxial (3A).

18. Procédé de détermination d'une caractéristique d'une trajectoire formée de positions successives d'un accéléromètre triaxial (3A) lié de manière solidaire à un élément mobile (EM), entre un premier instant d'immobilité ($t_0$) et un deuxième instant d'immobilité ($t_n$) de l'accéléromètre triaxial, consécutif audit premier instant d'immobilité (to), au moyen en outre d'un capteur additionnel triaxial de mesure d'un vecteur d'un champ vectoriel sensiblement constant entre lesdits premier et deuxième instants d'immobilité ($t_0, t_n$) dans un repère global fixe (GF) lié au repère terrestre, ledit capteur additionnel étant lié de manière solidaire audit élément mobile (EM) et fixe dans le repère de l'accéléromètre (3A), ledit procédé étant effectué par un dispositif comprenant l'accéléromètre triaxial et le capteur additionel triaxial, et comprenant les étapes suivantes :

- déterminer lesdits premier et deuxième instants d'immobilité ($t_0, t_n$) de l'accéléromètre triaxial (3A) ;

- déterminer un axe de rotation sensiblement invariant de l'accéléromètre triaxial entre les premier et deuxième instants d'immobilité, et déterminer un plan orthogonal audit axe de rotation sensiblement invariant, dans un repère mobile (LF) lié à l'accéléromètre (3A) ou au capteur additionnel, à partir des vecteurs délivrés par l'accéléromètre triaxial (3A) ou à partir des vecteurs délivrés par capteur additionnel ;

ledit procédé étant **caractérisé par** les étapes suivantes :

- calculer, auxdits instant successifs ($t_0$, $t_1$, ..., $t_n$), des premières projections orthogonales dans ledit plan, des vecteurs délivrés par l'accéléromètre triaxial (3A) et des vecteurs délivrés par le capteur additionnel dans ledit repère mobile ;

- déterminer, audits instants successifs ($t_0$, $t_1$, ..., $t_n$), la rotation de passage dudit repère mobile (LF) audit repère global fixe (GF), à partir desdites premières projections orthogonales des vecteurs délivrés par le capteur additionnel ;

- calculer, auxdits instants successifs ($t_0$, $t_1$, ..., $t_n$), des deuxièmes projections orthogonales dans ledit repère global fixe des premières projections orthogonales dans ledit plan des vecteurs délivrés par l'accéléromètre triaxial ;

- soustraire à chaque deuxième projection orthogonale dans ledit repère global fixe, le vecteur moyen sur lesdits instants successifs (to, $t_1$, ..., tn) de manière à obtenir les accélérations centrées dans ledit plan, dépourvues de l'influence de la gravité terrestre et des dérives dudit dispositif, dans ledit repère global fixe (GF) ; et

- déterminer une caractéristique de la trajectoire à partir des accélérations centrées.

## Patentansprüche

1. Vorrichtung zum Bestimmen einer Charakteristik eines Pfades, der von aufeinander folgenden Positionen eines triaxialen Beschleunigungsmessers (3A) gebildet wird, der fest mit einem beweglichen Element (EM) verbunden ist, zwischen einem ersten Immobilitätszeitpunkt ($t_0$) und einem auf den ersten Immobilitätszeitpunkt ($t_0$) folgenden zweiten Immobilitätszeitpunkt ($t_n$) des triaxialen Beschleunigungsmessers (3A), wobei die Vorrichtung ferner einen zusätzlichen triaxialen Sensor zum Messen eines Vektors eines im Wesentlichen konstanten Vektorfeldes zwischen dem ersten und dem zweiten Immobilitätszeitpunkt ($t_0$, $t_n$), in einem mit dem terrestrischen Bezugspunkt verbundenen festen globalen Bezugspunkt (GF), wobei der zusätzliche Sensor fest mit dem beweglichen Element (EM) verbunden und im Bezugspunkt des Beschleunigungsmessers (3A) fest ist, und Steuermittel (CMD) umfasst, wobei die Steuermittel (CMD) Folgendes umfassen:

- erste Mittel (MD1) zum Bestimmen des ersten und zweiten Immobilitätszeitpunkts ($t_0$, $t_n$) des triaxialen Beschleunigungsmessers (3A);

- zweite Mittel (MD2) zum Bestimmen einer im Wesentlichen invarianten Rotationsachse des triaxialen Beschleunigungsmessers (3A) zwischen dem ersten und zweiten Immobilitätszeitpunkt ($t_0$, $t_n$) und einer Ebene orthogonal zu der im Wesentlichen invarianten Rotationsachse, in einem beweglichen Bezugspunkt (LF), der mit dem Beschleunigungsmesser (3A) oder dem zusätzlichen Sensor verbunden ist, auf der Basis von durch den triaxialen Beschleunigungsmesser (3A) gelieferten Vektoren oder auf der Basis von vom zusätzlichen Sensor gelieferten Vektoren;

**dadurch gekennzeichnet, dass** die Steuermittel (CMD) Folgendes umfassen:

- erste Mittel (MC1) zum Berechnen, zu den aufeinander folgenden Zeitpunkten (to, $t_1$, ..., $t_n$), von ersten orthogonalen Projektionen auf der Ebene der vom triaxialen Beschleunigungsmesser (3A) gelieferten Vektoren und von vom zusätzlichen Sensor gelieferten Vektoren in dem beweglichen Bezugspunkt (LF);

- dritte Mittel (MD3) zum Bestimmen, zu den aufeinander folgenden Zeitpunkten (to, $t_1$, ..., $t_n$), der Passagerotation von dem beweglichen Bezugspunkt (LF) zu dem festen globalen Bezugspunkt (GF) auf der Basis der ersten orthogonalen Projektionen der von dem zusätzlichen Sensor gelieferten Vektoren;

- zweite Mittel (MC2) zum Berechnen, zu den aufeinander folgenden Zeitpunkten ($t_0$, $t_1$, ..., $t_n$), von zweiten orthogonalen Projektionen in dem globalen festen Bezugspunkt (GF), von den ersten orthogonalen Projektionen in der Ebene der von dem triaxialen Beschleunigungsmesser (3A) gelieferten Vektoren, geliefert von den ersten Rechenmitteln (MC1);

- dritte Rechenmittel (MC3) zum Subtrahieren, von jeder zweiten orthogonalen Projektion in dem festen globalen Bezugspunkt (GF), des mittleren Vektors zu den aufeinander folgenden Zeitpunkten ($t_0$, $t_1$, ..., $t_n$), um die in der Ebene zentrierten Beschleunigungen zu erhalten, ohne den Einfluss von Erdanziehung und von Abweichungen der Vorrichtung, in dem festen globalen Bezugspunkt (GF); und

- vierte Mittel (MC4) zum Berechnen einer Charakteristik des Pfades auf der Basis der zentrierten Beschleunigungen.

**2.** Vorrichtung nach Anspruch 1, bei der die aufeinander folgenden Positionen im Wesentlichen koplanar sind.

**3.** Vorrichtung nach Anspruch 1 oder 2, bei der das bewegliche Element (EM) ein Fuß ist, wobei das den ersten und den zweiten Immobilitätszeitpunkt ($t_0$, $t_n$) des triaxialen Beschleunigungsmessers (3A) trennende Zeitintervall einem Schritt des Fußes entspricht.

**4.** Vorrichtung nach einem der Ansprüche 1 bis 3, bei der die Steuermittel (CMD) erste Mittel (MEL1) zum Ausarbeiten eines Richtungsvektors umfassen, ausgelegt zum Verbinden der jeweiligen Positionen des triaxialen Beschleunigungsmessers (3A) zu dem ersten Immobilitätszeitpunkt ($t_0$) und dem zweiten Immobilitätszeitpunkt ($t_n$), ausgedrückt in dem festen globalen Bezugspunkt (GF).

**5.** Vorrichtung nach Anspruch 4, bei der, da die Ebene des Pfades vertikal ist, die Steuermittel (CMD) ferner zweite Mittel (MEL2) zum Ausarbeiten eines Kurses der Bewegung in Bezug auf das von dem zusätzlichen Sensor gemessene Vektorfeld umfassen, wobei die zweiten Ausarbeitungsmittel (MEL2) zum Bewirken einer orthogonalen Projektion des vom zusätzlichen Sensor gemessenen Vektorfeldvektors in einer horizontalen Ebene orthogonal zur Ebene des Pfades umfassen.

**6.** Vorrichtung nach einem der Ansprüche 1 bis 5, bei der, da die Ebene des Pfades vertikal ist, die zweiten Mittel (MD2) zum Ermitteln der Ebene des Pfades des triaxialen Beschleunigungsmessers (3A) ausgelegt sind zum:

- Bewirken einer Zerlegung der Dreispaltenmatrix $\left( A_p^{LF}\left( t_0 \ldots t_n \right) \right)$, die von den durch den triaxialen Beschleunigungsmesser (3A) zu den aufeinander folgenden Zeitpunkten ($t_0$, $t_1$, ..., $t_n$) gelieferten Werten gebildet wird, in Einzelwerte in dem beweglichen Bezugspunkt, und Extrahieren der zwei den beiden größten Einzelwerten entsprechenden Vektoren; oder

- Bewirken einer Zerlegung der Autokorrelationsmatrix der Dreispaltenmatrix, die von den durch den triaxialen Beschleunigungsmesser (3A) zu den aufeinander folgenden Zeitpunkten ($t_0$, $t_1$, ..., $t_n$) gelieferten Vektoren gebildet wird, in Eigenwerte und Eigenvektoren, in dem beweglichen Bezugspunkt (LF), und Extrahieren der beiden Eigenvektoren, die den beiden größten Eigenwerten entsprechen.

**7.** Vorrichtung nach einem der Ansprüche 1 bis 6, bei der die zweiten Rechenmittel (MC2) fünfte Mittel (MC5) zum Berechnen der Passage in einem Zwischenbezugspunkt (IF) umfassen, der mit dem terrestrischen Bezugspunkt verbunden ist, definiert durch einen von den ersten Rechenmitteln (MC1) gelieferten ersten Vektor, auf der Basis eines von dem zusätzlichen Sensor gelieferten Vektors, und durch einen zweiten Vektor, orthogonal zu dem ersten Vektor, der zur Ebene des Pfades gehört.

**8.** Vorrichtung nach einem der Ansprüche 1 bis 7, bei der die dritten Mittel (MD3) zum Bestimmen der Passagerotation von dem beweglichen Bezugspunkt (LF) zu dem festen globalen Bezugspunkt (GF) Mittel (MEST) zum Schätzen eines Winkels ($\alpha$) umfassen, wobei die Passagerotation durch eine orthogonale Projektion auf dem im Wesentlichen konstanten Vektorfeld definiert wird, gefolgt von einer Rotation des geschätzten Winkels ($\alpha$) in der Ebene des Pfades des triaxialen Beschleunigungsmessers (3A).

**9.** Vorrichtung nach Anspruch 8, bei der die Schätzmittel (MEST) zum Schätzen des Winkels ($\alpha$) ausgelegt sind:

- auf der Basis der Neigung ($\theta$) der Kontaktfläche des beweglichen Elements (EM) und des von den fünften Rechenmitteln (MC5) übertragenen Vektors auf der Basis des vom triaxialen Beschleunigungsmesser (3A) übertragenen Vektors; oder
- auf der Basis einer Zerlegung der von den fünften Rechenmitteln (MC5) gelieferten Dreispaltenmatrix in Einzelwerte, auf der Basis der Matrix ($A^{IF}$), die von den vom triaxialen Beschleunigungsmesser (3A) zu den aufeinander folgenden Zeitpunkten ($t_0$, $t_1$, ..., $t_n$) gelieferten Vektoren gebildet wird; oder
- als Winkel, zum ersten oder zweiten Immobilitätszeitpunkt ($t_0$, $t_n$), zwischen dem Vektor, der von den ersten Rechenmitteln (MC1) geliefert wird, auf der Basis des vom zusätzlichen Sensor gelieferten Vektors, und dem Vektor, der von den ersten Rechenmitteln (MC1) geliefert wird, auf der Basis des vom triaxialen Beschleunigungsmesser (3A) gelieferten Vektors.

**10.** Vorrichtung nach einem der vorherigen Ansprüche, bei der die Steuermittel (CMD) dritte Mittel (MEL3) zum Ausarbeiten der Distanz umfassen, die von dem triaxialen Beschleunigungsmesser (3A) zwischen dem ersten und zweiten Immobilitätszeitpunkt ($t_0$, $t_n$) durchlaufen wird, und/oder bei einem Satz von aufeinander folgenden Zeitintervallen, die zwei aufeinander folgende Immobilitätszeitpunkte ($t_0$, $t_n$) des triaxialen Beschleunigungsmessers (3A) trennen, auf der Basis von Daten, die von den vierten Rechenmitteln (MC4) geliefert werden.

11. Vorrichtung nach einem der vorherigen Ansprüche, bei der die Steuermittel (CMD) vierte Mittel (MEL4) zum Ausarbeiten eines Pfades während eines Satzes von aufeinander folgenden Zeitintervallen umfassen, die zwei aufeinander folgende Immobilitätszeitpunkte ($t_0$, $t_n$) des triaxialen Beschleunigungsmessers (3A) trennen, auf der Basis der Charakteristik des von den vierten Rechenmitteln (MC4) gelieferten Pfades.

12. Vorrichtung nach einem der vorherigen Ansprüche, bei der der zusätzliche Sensor ein triaxiales Magnetometer (3M) zum Messen des terrestrischen Magnetfeldes, im Wesentlichen konstant, zwischen dem ersten und zweiten Immobilitätszeitpunkt (to, $t_n$) ist.

13. Vorrichtung nach einem der vorherigen Ansprüche, bei der der triaxiale Beschleunigungsmesser (3A) so angeordnet ist, dass er im Wesentlichen an der Kontaktfläche des beweglichen Elements (EM) zu einem Immobilitätszeitpunkt des triaxialen Beschleunigungsmessers (3A) angeordnet ist.

14. Vorrichtung nach einem der vorherigen Ansprüche, bei der der zusätzliche Sensor so angeordnet ist, dass er sich in einer Distanz von der Kontaktfläche des beweglichen Elements (EM) zu einem Immobilitätszeitpunkt des triaxialen Beschleunigungsmessers (3A) befindet.

15. Vorrichtung nach einem der vorherigen Ansprüche, bei der die Steuermittel (CMD) mit dem beweglichen Element (EM) verbunden oder in einer Distanz von dem beweglichen Element (EM) angeordnet und zum Arbeiten in Echtzeit oder zeitversetzt ausgelegt sind.

16. System, das wenigstens eine Vorrichtung nach einem der Ansprüche 3 bis 15 umfasst, wobei das System Folgendes sein kann:

- ein Videospielsystem, das eine visuelle oder akustische Anzeige zum Anzeigen von wenigstens einem vom Spieler auszuführenden Schritt umfasst, oder
- ein Sprunganalysesystem, oder
- ein externes oder internes Geolokalisierungssystem, oder
- ein System zum Berechnen des Energieverbrauchs eines Nutzers.

17. System nach einem der vorherigen Ansprüche, bei dem die Charakteristik des Pfades des triaxialen Beschleunigungsmessers (3A) die Geschwindigkeit des triaxialen Beschleunigungsmessers (3A) und/oder den Pfad des triaxialen Beschleunigungsmessers (3A) umfasst.

18. Verfahren zum Bestimmen einer Charakteristik eines Pfades, der von aufeinander folgenden Positionen eines triaxialen Beschleunigungsmessers (3A) gebildet wird, der fest mit einem beweglichen Element (EM) verbunden ist, zwischen einem ersten Immobilitätszeitpunkt ($t_0$) und einem auf den ersten Immobilitätszeitpunkt ($t_0$) folgenden zweiten Immobilitätszeitpunkt ($t_n$) des triaxialen Beschleunigungsmessers, ferner unter Verwendung eines triaxialen zusätzlichen Sensors zum Messen eines Vektors eines im Wesentlichen konstanten Vektorfeldes zwischen dem ersten und dem zweiten Immobilitätszeitpunkt ($t_0$, $t_n$) in einem festen globalen Bezugspunkt (GF), der mit dem terrestrischen Bezugspunkt verbunden ist, wobei der zusätzliche Sensor fest mit dem beweglichen Element (EM) verbunden und in dem Bezugspunkt des Beschleunigungsmessers (3A) fest ist, wobei das Verfahren von einer Vorrichtung ausgeführt wird, die den triaxialen Beschleunigungsmesser und den triaxialen zusätzlichen Sensor umfasst, und die folgenden Schritte beinhaltet:

- Bestimmen des ersten und zweiten Immobilitätszeitpunkts ($t_0$, $t_n$) des triaxialen Beschleunigungsmessers (3A);
- Bestimmen einer im Wesentlichen invarianten Rotationsachse des triaxialen Beschleunigungsmessers zwischen dem ersten und dem zweiten Immobilitätszeitpunkt, und Bestimmen einer Ebene orthogonal zu der im Wesentlichen invarianten Rotationsachse in einem beweglichen Bezugspunkt (LF), der mit dem Beschleunigungsmesser (3A) oder dem zusätzlichen Sensor verbunden ist, auf der Basis der von dem triaxialen Beschleunigungsmesser (3A) gelieferten Vektoren oder auf der Basis der von dem zusätzlichen Sensor gelieferten Vektoren;
wobei das Verfahren **dadurch gekennzeichnet ist, dass** es die folgenden Schritte beinhaltet:
- Berechnen, zu den aufeinander folgenden Zeitpunkten ($t_0$, $t_1$, ..., $t_n$), von ersten orthogonalen Projektionen in der Ebene, von von dem triaxialen Beschleunigungsmesser (3A) gelieferten Vektoren und von von dem zusätzlichen Sensor gelieferten Vektoren in dem beweglichen Bezugspunkt;

- Bestimmen, zu den aufeinander folgenden Zeitpunkten (to, $t_1$, ..., $t_n$), der Passagerotation von dem beweglichen Bezugspunkt (LF) zu dem festen globalen Bezugspunkt (GF), auf der Basis der ersten orthogonalen Projektionen der von dem zusätzlichen Sensor gelieferten Vektoren;

- Berechnen, zu den aufeinander folgenden Zeitpunkten (to, $t_1$, ..., $t_n$), von zweiten orthogonalen Projektionen in dem festen globalen Bezugspunkt der ersten orthogonalen Projektionen in der Ebene der von dem triaxialen Beschleunigungsmesser gelieferten Vektoren;

- Subtrahieren von jeder zweiten orthogonalen Projektion in dem festen globalen Bezugspunkt des mittleren Vektors zu den aufeinander folgenden Zeitpunkten (to, $t_1$, ..., $t_n$), um die in der Ebene zentrierten Beschleunigungen zu erhalten, ohne den Einfluss der Erdanziehung und von Abweichungen der Vorrichtung, in dem globalen festen Bezugspunkt (GF); und

- Bestimmen einer Charakteristik des Pfades auf der Basis der zentrierten Beschleunigungen.

## Claims

1. Device for establishing a characteristic of a trajectory formed by successive positions of a triaxial accelerometer (3A) which is connected in a fixed manner to a movable element (EM) between a first immobility time (to) and a second consecutive immobility time ($t_n$) of the triaxial accelerometer (3A) with respect to the first immobility time (to), the device further comprising an additional triaxial sensor for measuring a vector of a vectorial field which is substantially constant between the first and second immobility times (to, $t_n$) in a fixed global reference point (GF) which is connected to the terrestrial reference point, the additional sensor being fixedly connected to the movable element (EM) and fixed in the reference point of the accelerometer (3A), and control means (CMD), the control means (CMD) comprising:

   - first establishment means (MD1) for the first and second immobility times (to, $t_n$) of the triaxial accelerometer (3A);
   - second establishment means (MD2) for a substantially invariant rotation axis of the triaxial accelerometer (3A) between the first and second immobility times (to, $t_n$), and a plane which is orthogonal to the substantially invariant rotation axis, in a movable reference point (LF) which is connected to the accelerometer (3A) or the additional sensor on the basis of the vectors supplied by the triaxial accelerometer (3A) or on the basis of the vectors supplied by the additional sensor;
   **characterised in that** the control means (CMD) comprise:
   - first calculation means (MC1), at the successive times (to, $t_1$,... $t_n$), for first orthogonal projections onto the plane of the vectors supplied by the triaxial accelerometer (3A) and the vectors supplied by the additional sensor in the movable reference point (LF),
   - third establishment means (MD3), at the successive times (to, $t_1$,... $t_n$), for the passage rotation from the movable reference point (LF) to the fixed global reference point (GF), on the basis of the first orthogonal projections of the vectors supplied by the additional sensor;
   - second calculation means (MC2), at the successive times (to, $t_1$,... $t_n$), for second orthogonal projections in the fixed global reference point (GF) of the first orthogonal projections in the plane of the vectors supplied by the triaxial accelerometer (3A), provided by the first calculation means (MC1);
   - third calculation means (MC3) in order to subtract, from each second orthogonal projection in the fixed global reference point (GF), the mean vector at the successive times (to, $t_1$,... $t_n$) so as to obtain the accelerations which are centred in the plane and which do not have the influence of terrestrial gravitational force and the derivatives of the device in the fixed global reference point (GF); and
   - fourth calculation means (MC4) for a characteristic of the trajectory on the basis of the centred accelerations.

2. Device according to claim 1, wherein the successive positions are substantially coplanar.

3. Device according to claim 1 or claim 2, wherein the movable element (EM) is a foot, the time interval separating the first and second immobility times (to, $t_n$) of the triaxial accelerometer (3A) corresponding to a step of the foot.

4. Device according to any one of claims 1 to 3, wherein the control means (CMD) comprise first processing means (MEL1) of a direction vector, which is suitable for connecting the respective positions of the triaxial accelerometer (3A) at the first immobility time (to) and at the second immobility time ($t_n$) which are expressed in the fixed global reference point (GF).

5. Device according to claim 4, wherein, the plane of the trajectory being vertical, the control means (CMD) further comprise second processing means (MEL2) of a movement course in relation to the vectorial field measured by the additional sensor, the second processing means (MEL2) being suitable for carrying out an orthogonal projection of the vector of a vectorial field which is measured by the additional sensor onto a horizontal plane which is orthogonal to the plane of the trajectory.

6. Device according to any one of claims 1 to 5, wherein, the plane of the trajectory being vertical, the second establishment means (MD2) of the plane of the trajectory of the triaxial accelerometer (3A) are suitable for:

- carrying out a breakdown into single values of the three-column matrix $\left(A_p^{LF}(t_0 \dots t_n)\right)$ formed by the vectors supplied by the triaxial accelerometer (3A) at the successive times (to, $t_1$,... $t_n$) in the movable reference point, and extracting the two vectors corresponding to the two largest single values; or
- carrying out a breakdown into eigenvalues and eigenvectors, in the movable reference point (LF), of the autocorrelation matrix of the three-column matrix formed by the vectors supplied by the triaxial accelerometer (3A) at the successive times (to, $t_1$,... $t_n$), and extracting the two eigenvectors corresponding to the two largest eigenvalues.

7. Device according to any one of claims 1 to 6, wherein the second calculation means (MC2) comprise fifth passage calculation means (MC5) in an intermediate reference point (IF) which is connected to the terrestrial reference point and which is defined by a first vector supplied by the first calculation means (MC1) on the basis of a vector supplied by the additional sensor, and by a second vector which is orthogonal to the first vector and which belongs to the plane of the trajectory.

8. Device according to any one of claims 1 to 7, wherein the third establishment means (MD3) of the passage rotation from the movable reference point (LF) to the fixed global reference point (GF) comprise estimation means (MEST) for an angle ($\alpha$), the passage rotation being defined by an orthogonal projection onto the substantially constant vectorial field followed by a rotation about the estimated angle ($\alpha$) in the trajectory plane of the triaxial accelerometer (3A).

9. Device according to claim 8, wherein the estimation means (MEST) are suitable for estimating the angle ($\alpha$):

- on the basis of the inclination ($\theta$) of the contact surface of the movable element (EM) and the vector transmitted by the fifth calculation means (MC5) on the basis of the vector transmitted by the triaxial accelerometer (3A); or
- on the basis of a breakdown into single values of the three-column matrix provided by the fifth calculation means (MC5) on the basis of the matrix ($A^{IF}$) formed by the vectors supplied by the triaxial accelerometer (3A) at the successive times (to, $t_1$,... $t_n$); or
- as the angle, at the first or second immobility time (to, $t_n$), between the vector supplied by the first calculation means (MC1) on the basis of the vector supplied by the additional sensor and the vector supplied by the first calculation means (MC1) on the basis of the vector supplied by the triaxial accelerometer (3A).

10. Device according to any one of the preceding claims, wherein the control means (CMD) comprise third processing means (MEL3) for the distance travelled by the triaxial accelerometer (3A) between the first and second immobility times (to, $t_n$), and/or in the event of a group of successive time intervals separating two successive immobility times (to, $t_n$) of the triaxial accelerometer (3A), on the basis of the data provided by the fourth calculation means (MC4).

11. Device according to any one of the preceding claims, wherein the control means (CMD) comprise fourth processing means (MEL4) for a trajectory during a group of successive time intervals separating two successive immobility times (to, $t_n$) of the triaxial accelerometer (3A) on the basis of the characteristic of the trajectory provided by the fourth calculation means (MC4).

12. Device according to any one of the preceding claims, wherein the additional sensor is a triaxial magnetometer (3M) for measuring the terrestrial magnetic field which is substantially constant between the first and second immobility times (to, $t_n$).

13. Device according to any one of the preceding claims, wherein the triaxial accelerometer (3A) is provided so as to be positioned substantially at the level of the contact surface of the movable element (EM) at an immobility time of the triaxial accelerometer (3A).

14. Device according to any one of the preceding claims, wherein the additional sensor is provided so as to be positioned remote from the contact surface of the movable element (EM) at an immobility time of the triaxial accelerometer (3A).

15. Device according to any one of the preceding claims, wherein the control means (CMD) are connected to the movable element (EM) or are provided remote from the movable element (EM) and are suitable for operating in real time or with a delay.

16. System comprising at least one device according to any one of claims 3 to 15, the system being able to be:

 - a video game system comprising a visual or audio indicator in order to indicate at least one step to be taken by the player or
 - a jump analysis system or
 - a geolocation system for the exterior or interior or
 - a system for calculating energy expenditure of a user.

17. System according to any one of the preceding claims, wherein the characteristic of the trajectory of the triaxial accelerometer (3A) comprises the speed of the triaxial accelerometer (3A) and/or the trajectory of the triaxial accelerometer (3A).

18. Method for establishing a characteristic of a trajectory formed by successive positions of a triaxial accelerometer (3A) which is connected in a fixed manner to a movable element (EM) between a first immobility time (to) and a second consecutive immobility time ($t_n$) of the triaxial accelerometer with respect to the first immobility time (to), further using an additional triaxial sensor for measuring a vector of a vectorial field which is substantially constant between the first and second immobility times (to, $t_n$) in a fixed global reference point (GF) which is connected to the terrestrial reference point, the additional sensor being fixedly connected to the movable element (EM) and fixed in the reference point of the accelerometer (3A), the method being carried out by a device comprising the triaxial accelerometer and the additional triaxial sensor and comprising the following steps:

 - establishing the first and second immobility times (to, $t_n$) of the triaxial accelerometer (3A);
 - establishing a substantially invariant rotation axis of the triaxial accelerometer between the first and second immobility times, and establishing a plane which is orthogonal to the substantially invariant rotation axis, in a movable reference point (LF) which is connected to the accelerometer (3A) or the additional sensor on the basis of the vectors supplied by the triaxial accelerometer (3A) or on the basis of the vectors supplied by the additional sensor;

 the method being **characterised by** the following steps:
 - calculating at the successive times (to, $t_1$,... $t_n$) first orthogonal projections in the plane, vectors supplied by the triaxial accelerometer (3A) and vectors supplied by the additional sensor in the movable reference point;
 - establishing, at the successive times (to, $t_1$,... $t_n$) the passage rotation from the movable reference point (LF) to the fixed global reference point (GF) on the basis of the first orthogonal projections of the vectors supplied by the additional sensor;
 - calculating at the successive times (to, $t_1$,... $t_n$) the second orthogonal projections in the fixed global reference point of the first orthogonal projections in the plane of the vectors supplied by the triaxial accelerometer;
 - subtracting, from each second orthogonal projection in the fixed global reference system, the mean vector at the successive times (to, $t_1$,... $t_n$) so as to obtain the accelerations which are centred in the plane and which do not have the influence of terrestrial gravitational force and the derivatives of the device in the fixed global reference point (GF); and
 - establishing a characteristic of the trajectory on the basis of the centred accelerations.

EM

3A

3M

$A^{LF}$

$B^{LF}$

CMD

MD1

$A^{LF}(t_0...t_n)$

MD2

$B^{LF}(t_0...t_n)$

$[\vec{u_1}\,;\,\vec{u_2}]$

$A_p^{LF}(t_0...t_n)$

MC1

MC5

$B_p^{LF}(t_0...t_n)$

$b_P(t_0...t_n)$
$b_P^{\perp}(t_0...t_n)$

MD3

$A_b^{LF}(t_0...t_n)$
$A_{b\perp}^{LF}(t_0...t_n)$

MEST

MC3

Vecteur de direction

Cap de déplacement

Distance parcourue

Trajectoire

MEL 1

MEL 2

MEL 3

MEL 4

MULT

$\alpha, M\alpha$

$A_c^h = A_{b_r}^{GF} - \overline{A_{b_r}^{GF}}$

$A_c^v = A_{b_r\perp}^{GF} - \overline{A_{b_r}^{GF\perp}}$

Trajectoire pas

MC4

MC2

$A^{GF}$

FIG.1

21

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2008116315 B

**Littérature non-brevet citée dans la description**

- **A. MAALI ; A. OULDALI ; H. MIMOUN ; G. BAUDOIN.** An evaluation of UWB localization under non line-of-sight (NLOS) propagation. *Wireless Pervasive Computing, ISWPC, 3rd International Symposium,* Mai 2008, 379-382
- Inertial head-tracker sensor fusion by a complementary separate-bias kalman filter. *Proceedings of the IEEE,* 1996, 185-194
- **K. KOGURE ; L. SEON-WOO ; K. MASE.** Detection of spatio-temporal gait parameters by using wearable motion sensors. *Engineering in Medicine and Biology Society,* 2005, 6836-6839
- Pedestrian tracking with shoe-mounted inertial sensors. Computer Graphics and Applications. IEEE, Novembre 2005, vol. 25, 38-46
- **P. ROBERTSON ; B. KRACH.** Integration of foot-mounted inertial sensors into a Bayesian location estimation framework. *Positioning, Navigation and Communication,* Mars 2008, 55-61
- **S. SCAPELLATO ; F. CAVALLO ; A.M. SABATINI ; C. MARTELLONI.** Assessment of walking features from foot inertial sensing. *Biomedical Engineering, IEEE Transactions,* Mars 2005, 486-494
- **D. ALVAREZ ; A.M LOPEZ ; J. RODRIGUEZ-URIA ; J.C. ALVAREZ ; R.C. GONZALEZ.** Multisensor approach to walking distance estimation with foot inertial sensing. *Engineering in Medicine and Biology Society,* 2007, 5719-5722
- **K. FYFE ; GÉRARD LACHAPELLE ; R. STIRLING ; J. COLLIN.** An innovative shoe-mounted pedestrian navigation system. *Proc. European Navigation Conf.,* Avril 2003
- **D.H. HWANG ; J.H. JANG ; J.W. KIM.** Robust step detection method for pedestrian navigation systems. *Electronics Letters,* Juillet 2007, vol. 43 (14